(19) Europäisches Patentamt

European Patent Office

Office européen des brevets

(11) **EP 3 975 374 A1**

(12) # EUROPEAN PATENT APPLICATION

(43) Date of publication:
**30.03.2022 Bulletin 2022/13**

(21) Application number: **20201302.5**

(22) Date of filing: **12.10.2020**

(51) International Patent Classification (IPC):
*H02J 7/00* *(2006.01)*

(52) Cooperative Patent Classification (CPC):
**H02J 7/0024; H02J 7/0047**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2020 EP 20197861**

(71) Applicant: **Universität der Bundeswehr München**
**85579 Neubiberg (DE)**

(72) Inventors:
• **Kuder, Manuel**
**81673 München (DE)**
• **Kersten, Anton**
**41523 Göteborg (SE)**

(74) Representative: **Lucke, Andreas**
**Boehmert & Boehmert**
**Anwaltspartnerschaft mbB**
**Pettenkoferstrasse 22**
**80336 München (DE)**

(54) **BATTERY STATUS PARAMETER ESTIMATION OF BATTERY CELLS, MODULES OR PACKS IN A RECONFIGURABLE BATTERY SYSTEM OR MODULAR ENERGY STORAGE DIRECT CONVERTER SYSTEM**

(57)    Disclosed herein are energy storage systems comprising cascaded energy storages, at least some of which being formed by battery cells or battery packs, and a switching arrangement allowing for establishing selected connection states of said energy storages. Control systems and methods allowing for determining a status parameter of individual energy storages in said energy storage systems are likewise disclosed. In one embodiment, the status parameter is determined based on a current flow into or out of a given energy storage when the given energy storage is connected in parallel with another energy storage. In another embodiment, the status parameter is determined using electrochemical impedance spectroscopy, wherein part of the energy storage system and part of an electrical consumer are used for generating an AC current injected into a given energy storage.

Fig. 20

EP 3 975 374 A1

**Description**

FIELD OF THE INVENTION

The present invention is in the field of power supplies for electrical devices such as electrical motors. More particularly, the present invention relates to a system and method for estimating status parameters of batteries or battery packs in energy storage systems such as modular energy storage direct converter systems (MESDCS) or reconfigurable battery systems (RBS).

BACKGROUND OF THE INVENTION

Battery-powered systems have increased in importance in various fields of technology, including electric mobility, where battery systems form a key component for the mobility of the future. In order to make use of the energy stored in a battery system, an additional power electric converter is usually needed, which may serve for stabilizing the output voltage or for generating a desired phase of an alternating voltage.

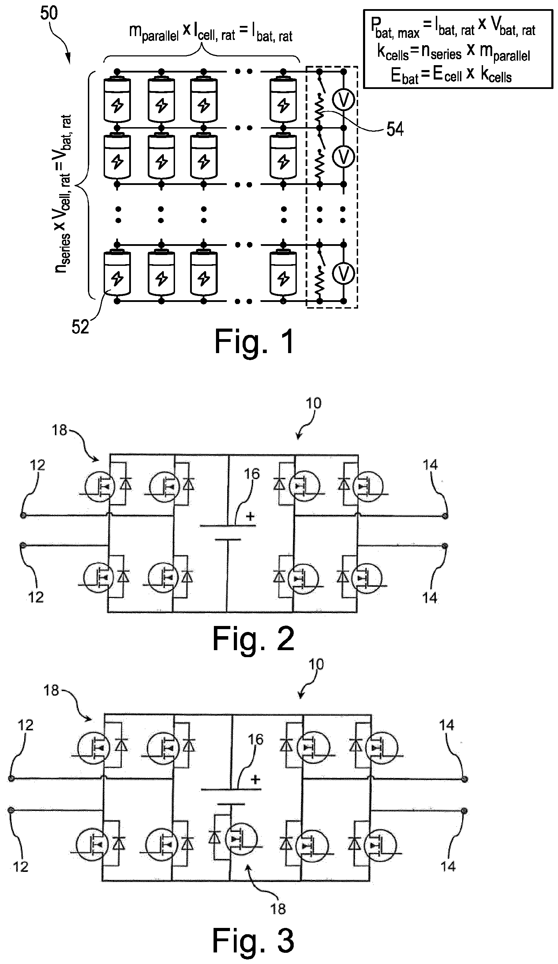

Fig. 1 schematically shows an example of conventional battery system, in this case a block battery pack 50, comprising a number of $k_{cells}$ battery cells 52. The block battery pack 50 comprises a number of $n_{series}$ groups of battery cells 52 connected in series, wherein each group comprises a number of $m_{parallel}$ battery cells 52 connected in parallel, i.e $k_{eells} = n_{series} \cdot m_{parallel}$. Assuming that each of the battery cells 52 is capable of supplying a voltage $V_{cell,rat}$ and carrying a current $I_{cell,rat}$, the block battery pack 50 as a whole may provide a current $I_{bat,rat} = m_{parallel} \cdot I_{cell,rat}$, a voltage $V_{bat,rat} = n_{series} \cdot V_{cell,rat}$ and a power $P_{bat,rat} = I_{bat,rat} \cdot V_{bat,rat}$. The total energy $E_{bat}$ contained in the block battery pack 10 amounts to $k_{cells} \cdot E_{cell}$, where $E_{cell}$ is the energy contained in each individual battery cell 52.

The block battery pack 50 shown in Fig. 1 is equipped for passive balancing. Bleeder resistors 54 can be connected to constrain the maximum voltages during charging. Battery cells 52 can be discharged until one cell string has reached its minimum voltage. The parallel cell strand with the lowest capacity constrains the total capacity of the entire block battery pack 50. Since individually degraded battery cells can typically not be replaced, the reduced lifetime of individual cells 52 reduces the overall lifetime of the block battery pack. If the state of health (SOH) of a battery pack used for traction motors has dropped below 80%, it is usually replaced and is typically used as a so-called "second use battery" for stationary applications.

In DE 10 2014 110 410 A1, a modular energy storage direct converter system (MESDCS) was proposed which combines the storage capacity of batteries with the topology of a multilevel converter. The MESDCS comprises one or more converter arms each comprising a plurality of cascaded modules, wherein each module comprises an energy storage, such as a battery (or a battery pack), and a plurality of module switches allowing for selectively connecting energy storages of adjacent modules in series, and depending on the specific design, further allowing to connect energy storage elements of adjacent modules in one or more of anti-series, in parallel or in a bypass state, also referred to as a "deactivated state", where the energy storage element is bypassed in the series connection or parallel connection of energy storages of adjacent modules. The generic term "modular energy storage direct converter system" introduced in this prior art and also used herein derives from the fact that it is "modular" by being built up of modules, is capable of storing energy by means of energy storage elements provided in said modules, and is a "direct converter system" in as much as it is designed to actuate the module switches in such way that the converter arm as a whole already supplies a desired output voltage, such that no additional converter is needed. Indeed, the MESDCS can generally provide arbitrary DC output voltages or AC output voltage waveforms by means of actuating at least a part of said plurality of module switches.

It is worth noting that the same flexibility as available for the output voltages also applies for the charging of the energy storage elements, which can be charged with practically any voltage applied across the converter arm, including both DC and AC voltages.

DE 10 2014 110 410 A1 also shows how a MESDCS can be used for three-phase electric power systems. For coupling the MESDCS with a three-phase current load, the converter arms are connected either in star topology or in ring topology. Since the batteries that may be used in the modules as energy storage elements may have an appreciable internal resistance, this document proposes to switch modules in parallel if smaller overall output voltages are needed, to thereby decrease the total resistance of the converter arm. Note that wherever reference is made herein to switching "modules in parallel/in series" this is to be understood as a short way of saying that the energy storage elements of the modules are switched in parallel/in series.

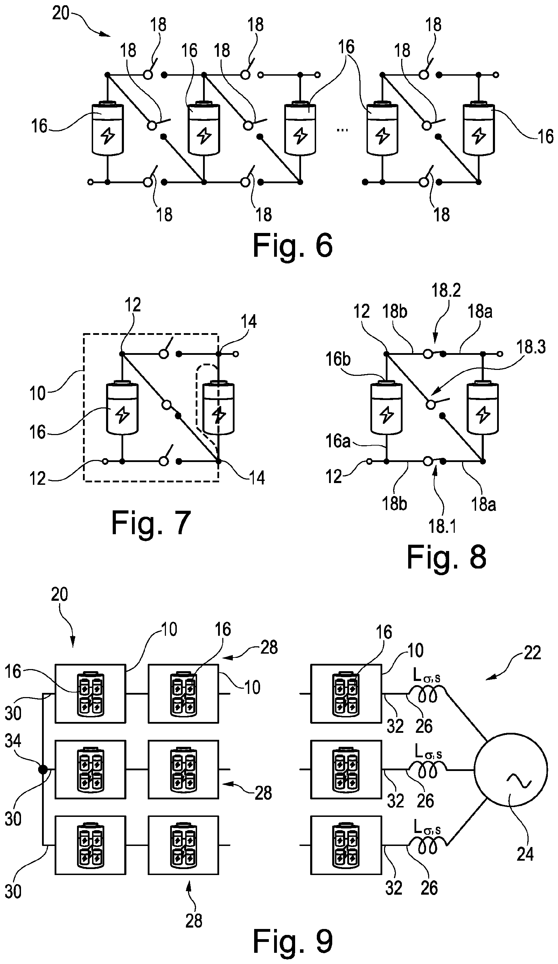

Fig. 2 shows an individual module 10 corresponding to the module shown in Fig. 7 of DE 10 2014 110 410 A1. This module 10 comprises two first terminals 12, two second terminals 14, an energy storage 16 and a total of eight switches 18, arranged in two halve bridges on both sides of the energy storage 16. The module 10 allows for selectively switching the energy storage 16 of adjacent modules 10 selectively in series, in anti-series (i.e. with reversed polarity), in parallel, and to selectively "deactivate" the energy storage 16 by bypassing it in a series connection of the energy storage elements 16 of adjacent modules 10 on both sides. Fig. 3 shows a further module 10 having a ninth switch 18 directly adjacent to the energy storage 16, which allows for switching modules 10 in parallel which are separated by an arbitrary number of deactivated modules 10 (modules 10 with bypassed energy storage elements 16) of the same type. The modules 10 of Fig. 2 and 3 are so called four-quadrant modules, since they can operate in all four quadrants of the voltage-current plane. However, the flexibility of the modules of Fig. 2 and 3 comes at the price of a large number of module switches 18 and corresponding switching effort.

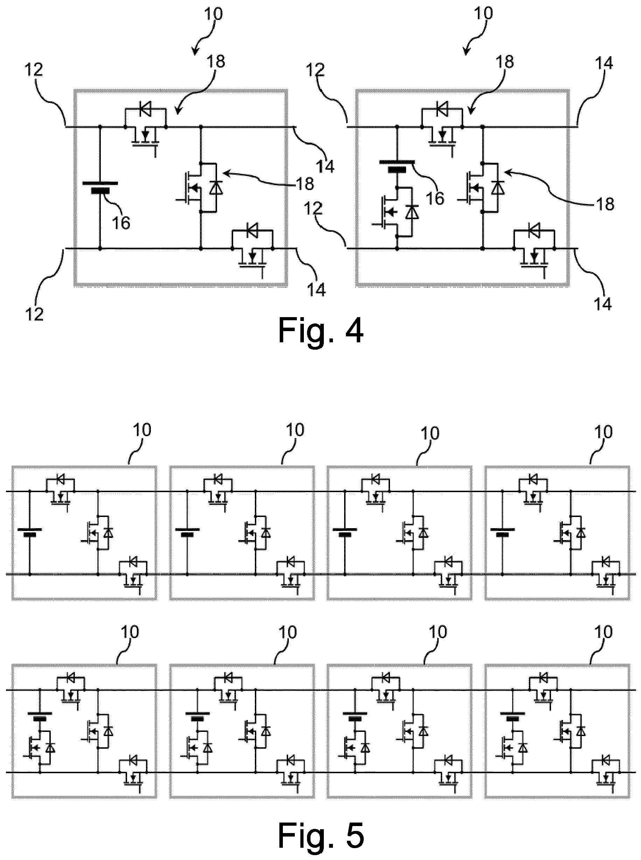

Fig. 4 shows two alternative modules 10, likewise comprising two first terminals 12, two second terminals 14, and an energy storage 16, but only three (left module) and four (right module) semiconductor switches, respectively. Fig. 5 shows four three-switch modules 10 (upper part of the figure) and four four-switch modules 10 (lower part of the figure) connected one behind the other such as to form part of a converter arm. The three-switch module 10 shown on the left of Fig. 4 allows for connecting the energy storages 16 of adjacent modules 10 selectively in series and in parallel, and to bypass it in a series connection. However, it does not permit connecting adjacent modules in anti-series, i.e. changing the polarity of the energy storage element 16 in the series connection, nor does it allow to bypass the energy storage element 16 in a parallel connection of its adjacent modules, which however is possible with the four-switch module 10 shown on the right of Fig. 4.

Since the modules 10 shown in Fig. 5 cannot change their polarity in the series connection, the series connection of modules 10 as a whole (and a converter arm formed by such cascaded modules 10) can only provide voltages of one polarity, which is referred to as "unipolar output voltage" herein. In order to use these modules in an MESDCS that provides bipolar AC voltages, DE 10 2014 110 410 A1 suggests to provide an additional polarity reversing circuit (not shown) comprising four additional switches and allowing for changing the polarity of the entire converter arm composed of said three- or four-switch modules 10.

The MESDCS as disclosed in the above-referenced DE 10 2014 110 410 A1 has a number of attractive advantages. For example, since the voltages associated with each individual energy storage 16 can be comparatively low, the module switches 18 do not have to switch high voltages. This for example allows for using standard low-voltage silicon MOSFETs instead of more expensive and lossy IGBTs or silicon carbide MOSFETs. Moreover, switching of lower voltages by the module switches 18 allows for a better electromagnetic compatibility and reduced total harmonic distortion.

Further advantages are more fault tolerant operation as well as an increased drive cycle or partial load efficiency. Namely, if lower overall voltages are needed, a larger number of energy storages 16 can be connected in parallel, thereby decreasing the internal resistance of the MESDCS. By the same token, if high voltages are required, the number of energy storages 16 (or groups of parallel connected storages 16) that are connected in series can be increased. Moreover, by integrating the power electronics on a module level, and hence on the level of a small battery pack level or even a single battery cell, the converter can additionally act as a part of the battery management system. This advantage can be exploited even if the inherent "converter capability" of the MESDCS is not employed, but if it is e.g. combined with an additional dedicated propulsion converter. Such systems having the same modular structure and switching capability but not acting as a direct converter are sometimes referred to as a "reconfigurable battery system" (RBS). Examples of an RBS are found e.g. in S. Ci, N. Lin, and D. Wu, "Reconfigurable battery techniques and systems: A survey," IEEE Access, vol. 4, pp. 1175-1189, 2016; F. Chen, W. Qiao, and L. Qu, "A modular and reconfigurable battery system," in 2017 IEEE Applied Power Electronics Conference and Exposition (APEC), March 2017, pp. 2131-2135, and W. Han, T. Wik, A. Kersten, G. Dong, and C. Zou, "Next-Generation Battery Management Systems: Dynamic Reconfiguration," IEEE Ind. Electron. Mag., 2020, accepted.

Using an MESDCS or an RBS drive train topology, each battery cell/module can be drained according to its individual capacity. In this manner the battery can be fully utilized even if individual battery cells have a reduced state of health. This in turn increases the actual life time of the drive train, since as mentioned above, common traction batteries are typically replaced if the SOH drops below 80 %.

On the other hand, due the cascaded structure of the converter, the integrated battery packs are stressed with additional low order harmonic components, which reduces the battery efficiency in comparison to a classical two-level converter system, as has been discussed by the present inventors in A. Kersten, M. Kuder, E. Grunditz, Z. Geng, E. Wikner, T. Thiringer, T. Weyh, and R. Eckerle, "Inverter and battery drive cycle efficiency comparisons of chb and mmsp traction inverters for electric vehicles" in 2019 21st European Conference on Power Electronics and Applications (EPE '19 ECCE Europe), Sep. 2019, pp. P.1-P.12, in O. Theliander, A. Kersten, M. Kuder, E. Grunditz, and T. Thiringer, "Lifep04battery modeling and drive cycle loss evaluation in cascaded h-bridge inverters for vehicles," in 2019 IEEE Transportation Electrification Conference and Expo (ITEC), June 2019, pp. 1-7, and in A. Kersten, O. Theliander, E. A. Grunditz, T. Thiringer, and M. Bongiorno, "Battery loss and stress mitigation in a cascaded h-bridge multilevel inverter for vehicle traction applications by filter capacitors," IEEE Transactions on Transportation Electrification, vol. 5, no. 3, pp. 659-671, Sep. 2019.

It is often controversially discussed whether these low order harmonics can cause a rapid ageing of the battery cells, which has in fact been proven to be wrong in A. Bessman, R. Soares, O. Wallmark, P. Svens, and G. Lindbergh, "Aging effects of ac harmonics on lithium-ion cells," Journal of Energy Storage, vol. 21, pp. 741-749, 2019, and in F.

Helling, S. Götz, and T. Weyh, "A battery modular multilevel management system (bm3) for electric vehicles and stationary energy storage systems," in 2014 16th European Conference on Power Electronics and Applications, Aug 2014, pp. 1-10.

For two-level inverter drives, different algorithms to trigger battery faults (X. Li and Z. Wang, "A novel fault diagnosis method for lithium-ion battery packs of electric vehicles," Measurement, vol. 116, pp. 402-411, 2018) or to monitor the battery pack's state of health and state of charge (SOC) (D. Andre, C. Appel, T. Soczka-Guth, and D. U. Sauer, "Advanced mathematical methods of SOC and SOC estimation for lithium-ion batteries," Journal of power sources, vol. 224, pp. 20-27, 2013; X. Hu, D. Cao, and B. Egardt, "Condition monitoring in advanced battery management systems: Moving horizon estimation using a reduced electrochemical model," IEEE/ASME Transactions on Mechatronics, vol. 23, no. 1, pp. 167-178, Feb 2018) have been proposed.

Furthermore, detailed analysis for the recursive parameter extraction of a generic electric impedance model in time and frequency-domain have been described e.g. in

S. Skoog and S. David, "Parameterization of linear equivalent circuit models over wide temperature and soc spans for automotive lithium-ion cells using electrochemical impedance spectroscopy," Journal of Energy Storage, vol. 14, pp. 39-48, 2017; A. Hentunen, T. Lehmuspelto, and J. Suomela, "Time-domain parameter extraction method for thevenin-equivalent circuit battery models," ieee transactions on energy conversion, vol. 29, no. 3, pp. 558-566, 2014;

S. Skoog, "Parameterization of equivalent circuit models for high power lithium-ion batteries in hev applications," in 2016 18th European Conference on Power Electronics and Applications (EPE'16 ECCE Europe), Sep. 2016, pp. 1-10;

Y.-H. Chiang, W.-Y. Sean, and J.-C. Ke, "Online estimation of internal resistance and open-circuit voltage of lithium-ion batteries in electric vehicles," Journal of Power Sources, vol. 196, no. 8, pp. 3921-3932, 2011;

B. Fridholm, T. Wik, and M. Nilsson, "Robust recursive impedance esti- mation for automotive lithium-ion batteries," Journal of Power Sources, vol. 304, pp. 33-41, 2016;

H. Blanke, O. Bohlen, S. Buller, R. W. De Doncker, B. Fricke, A. Hammouche, D. Linzen, M. Thele, and D. U. Sauer, "Impedance measurements on lead-acid batteries for state-of-charge, state-of-health and cranking capability prognosis in electric and hybrid electric vehicles," Journal of power Sources, vol. 144, no. 2, pp. 418-425, 2005; and

P. Mauracher and E. Karden, "Dynamic modelling of lead/acid batteries using impedance spectroscopy for parameter identification," Journal of power sources, vol. 67, no. 1-2, pp. 69-84, 1997.

SUMMARY OF THE INVENTION

A problem underlying the invention is to provide an energy storage system comprising a plurality of energy storages, in particular an MESDCS or an RBS of the type described above, that allows for improved operation in spite of ageing or other types of change in the status of individual energy storages.

This problem is solved by a system of claim 1, and alternatively by a system according to claim 7. This problem is further solved by a method according to claim 12, and alternatively by a method according to claim 14. Preferable embodiments are defined in the dependent claims.

According to a first aspect of the present invention, an energy storage system is provided which comprises a branch comprising a plurality of cascaded energy storages. At least some, in some embodiments all of said energy storages are formed by a battery cell or a battery pack comprising a plurality of battery cells. The system further comprises a voltage sensor associated with at least some of said energy storages for determining its voltage, a switching arrangement comprising a plurality of switches, a control system, and at least one current meter.

The plurality of switches of said switching arrangement are operable, under control of the control system, such as to establish a selectable connection state for each of said energy storages, said connection states being selectable from a series connection with an adjacent energy storage,

a parallel connection with an adjacent energy storage, and

a bypass state.

Moreover, said control system is configured to select and establish said connection states based on at least one of a total voltage to be generated across the branch, the current voltage and/or state of charge of an individual energy storage and a status parameter of said individual energy storage, in particular a power capability, a temperature and/or a state of health.

Moreover, the control system is further configured to operate said switching arrangement to carry out an estimation of a status parameter of a given energy storage, by connecting said given energy storage and a further energy storage in parallel, to thereby cause a current flow into or out of said given energy storage, measuring said current flow and the voltage of said given energy storage using said at least one current meter and the voltage sensor associated with said given energy storage, and determining said status parameter based on a time-dependent voltage-current characteristic.

The energy storage system of the invention hence comprises a branch of cascaded energy storages that can be selectively connected according to the aforementioned connection states using the switching arrangement in a manner known from MESDCS or RBS of the type described in the above background of the invention. Herein, in a manner also generally known from the MESDCS referred to above, the connection states can be selected and established based e.g. on the total voltage to be generated across the branch and the current voltage of individual energy storages. For example, in the above-mentioned prior art document DE 10 2014 110 410 A1, a dynamical balancing scheme was described where the individual energy storages are balanced by an intelligent selection of their connection states, in which the voltages of the individual energy storages are automatically balanced without having to shift charge from one energy storage to the other.

However, the inventors noticed that the operation performance can be improved if more detailed information about the status of individual energy storages, in particular its power capability and/or state of health was known.

From the above literature, one could conclude that a useful way of determining the status of energy storages, in particular individual battery cells or small battery packs, could be by determining their impedance. However, notably, in the entire previously mentioned literature, there is no suggestion of determining the impedance or a related quantity of individual energy storages in an MESDCS or an RBS.

Moreover, the skilled person is used to conventional battery packs based on hardwired connections, which makes both, the impedance determination of individual cells as well as the replacement of weak and faulty battery cells complicated. In order to allow for impedance measurements of batteries in conventional energy storage systems, one would therefore usually need a significant circuitry overhead to make individual batteries accessible for impedance measurement.

According to the first aspect of the invention, however, in order to estimate the status parameter of a given energy storage, this given energy storage and a further energy storage are connected in parallel to thereby cause a current flow into or out of said given energy storage, provided that the current voltages of the two energy storages do not precisely match. Using the aforementioned current meter and said voltage sensor associated with the given energy storage, a time-dependent voltage-current characteristic can be determined, from which the status parameter can be derived. For example, from the time-dependent voltage-current characteristic the impedance can be determined, which is indicative of the status of the energy storage.

As will be demonstrated below, this way the impedance of the given energy storage can be determined with sufficient precision such as to obtain a good estimate of the state of health of the energy storage. In some embodiments, the impedance may hence represent the status parameter. In other embodiments, the status parameter may be a quantity that is derived from the impedance using a suitable algorithm or formula. However, if the status parameter is not identical to the impedance, but e.g. a parameter that is derivable from or related to it, it is not necessary that the impedance is explicitly determined. For example, in some embodiments, the time-dependent voltage-current characteristic may form an input to some formula or algorithm that directly derives the status parameter, without determining the impedance as an intermediate step. Such an algorithm may be semiempirical, and may e.g. a machine learning algorithm, that has been trained in a suitable manner. Large amounts of training data can for example be generated by precise simulation of the energy storage for different values of the status parameter. Once the machine learning is appropriately trained, the status parameter can be determined rapidly with very low computational effort.

The state of health or similar information can then be used by the control system in the operation of the energy storage system when selecting the connection states. For example, energy storages with a better state of health may be more frequently be relied on in a series or parallel connection, while energy storages of weaker health may be more frequently or even permanently bypassed. Importantly, the determination of the status parameter requires hardly any additional hardware expense, since the capability of selectively connecting adjacent energy storages in parallel is provided for the ordinary operation anyhow. Moreover, in MESDCS or RBS, a voltage sensor is normally associated with at least some of the energy storages, such that no additional hardware expense is required in this regard either. Herein, the expression that the voltage sensors "associated" with a given energy storage could imply that a dedicated voltage sensor is provided for the given energy storage, but could also mean that a voltage sensor is provided that can be switchably connected with a plurality of energy storages. The main additional expense on the hardware side is the current meter for measuring the current flow between the two energy storages, which would typically not be available in MESDCS or RBS.

While in the specific embodiments described herein, all of the energy storages are shown to be battery cells or battery packs, the invention is not limited to this. One of the remarkable advantages of MESDCS is that different types of energy storages can be combined in the same converter structure. Indeed, it is also possible to combine energy storages, such as batteries with energy conversion elements, such as fuel cells, solar panels or the like. In these mixed energy storage/energy conversion element embodiments, the status parameter of battery cells and battery packs can be determined in the same way as described herein.

In a preferred embodiment, said branch comprises a plurality of sequentially interconnected modules, wherein each module comprises at least two first terminals and at least two second terminals, a corresponding one of said energy storages, and a plurality of module switches, wherein said module switches of said plurality of modules form said switching arrangement, wherein in each two adjacent modules, each of the at least two first terminals of one module is connected either directly or via an intermediate component to a corresponding one of said at least two second terminals of the other module.

In a preferred embodiment, said energy storage system comprises one or more modular energy storage direct converter systems (MESDCS), wherein each MESDCS comprises a converter arm having a first end and a second end and comprising a branch of sequentially interconnected modules, wherein said control system is configured for controlling the switches of the sequentially interconnected modules such as to establish, for each of said modules, connection states selected from

- said series connection with an adjacent energy storage,
- said parallel connection with an adjacent energy storage and
- said bypass state,

such as to provide a desired voltage, in particular a desired AC voltage between the first and second ends of said converter arm.

In other embodiments, said energy storage system is a reconfigurable battery system, in which the control system is configured to dynamically select and establish, for each of said energy storages, connection states selected from

- said series connection with an adjacent energy storage,
- said parallel connection with an adjacent energy storage and
- said bypass state,

wherein said control system is configured to make said selection based on one or both of the current voltage and a status parameter of individual ones of said energy storages, in particular a power capability and/or a state of health.

Note that structurally, an MESDCS and an RBS are very similar. Generally, an MESDCS may have the same functionalities as an RBS, but in addition the "direct converter" capability, such that it outputs a desired voltage waveform without having to provide for an additional converter. But in a sense, the distinction is gradual. For example, even if an RBS is used in combination with an additional converter, such as a propulsion converter for an electric vehicle, it may allow for selectively providing output voltages according to the load of the vehicle, by selecting the number of energy storages (or more typically, groups of parallel connected energy storages) connected in series, which could be regarded as a converter functionality. Typically, the energy storages in an RBS will be individual battery cells, while the energy storages in each module of an MESDCS will be formed by small or moderate size battery packs, but this distinction is not very sharp either. For example, it is in principle possible to use individual battery cells as an energy storage in a module of an MESDCS, allowing for optimum battery cell management using the switching infrastructure of the MESDCS only, at the price of a larger number of modules and hence switching effort, both with respect to switching hardware as well as switching control. This is a conceivable embodiment, particularly if the number of switches per module is only three or four.

In preferred embodiments, each of said modules has at most four module switches, and preferably (exactly) three module switches.

Herein, each module has two first terminals and two second terminals, wherein each energy storage has a first pole connected or connectable with one of the first terminals and a second pole connected or connectable with the other one of the first terminals, and wherein said plurality of module switches comprise

- a first switch having a first switch terminal connected with one of the second terminals of the module and a second switch terminal connected or connectable with the first pole of said energy storage/energy conversion element,
- a second switch having a first switch terminal connected with the other one of the second terminals of the module and a second switch terminal connected or connectable with the second pole of said energy storage/energy conversion element, and
- a third switch provided in a connection line connecting the first switch terminal of the first switch and the second switch terminal of the second switch,

said module allowing for connecting its energy storage in series with the energy storage of an adjacent module connected to its second terminals by opening the first and second switches and closing the third switch, and for connecting its energy storage in parallel with the energy storage of an adjacent module connected to its second terminals by closing the first and second switches and opening the third switch.

Accordingly, this type of module needs only three switches to provide for the aforementioned connection states, i.e. series connection, parallel connection and bypass state, and in particular allows for the parallel connection between adjacent modules for the purpose of determining the status parameter.

In a preferred embodiment, however, each module further comprises a fourth switch connected either between the first pole of said energy storage and the second switch terminal of the first switch, or between the second pole of said energy storage and the second switch terminal of the second switch, said fourth switch allowing for bypassing the energy storage of a given module in a parallel connection of energy storages/energy conversion elements of adjacent modules connected to the first terminals and second terminals of said given module, respectively.

With this module type, any two non-adjacent modules in the same branch can be connected in parallel with any modules arranged in between being in the bypass state. As indicated above, when referring to "modules" being in a certain connection state, this is merely a short way of saying that the energy storages of these modules are in the respective connection state. The capability of connecting non-adjacent modules in parallel has many advantages. For example, in ordinary operation, it allows for selecting modules having (at least almost) identical voltages for parallel connection, such as to avoid or reduce lossy charge transfer between them. Additional modules can then be added to the parallel connection later in an intelligent balancing scheme once their current voltage matches that of the group of parallel connected modules. This selection becomes possible if non-adjacent modules can be connected in parallel with bypassed or "deactivated" modules in between. Conversely, in the status parameter determination of the first aspect, where charge transfer is actually desired, this allows for selecting said given energy storage and said other energy storage as having a large voltage difference, where the two energy storages need not be located in adjacent modules. Moreover, as will be explained below, this also allows for carrying out the status parameter measurement for large number or even all of the modules using a small number of voltage meters, and possibly only a single current meter.

In an alternative embodiment, said plurality of module switches allow for connecting energy storages of adjacent modules in anti-series. Herein, the "anti-series connection" of an energy storage corresponds to a series connection with reversed polarity. This in particular allows for changing the polarity of the voltage along the entire branch, i.e. to provide a bipolar voltage output. In this embodiment too, said plurality of modules preferably further allow for bypassing the energy storage of a given module in a parallel connection of energy storages of adjacent modules connected to the first terminals and second terminals of said given module, respectively.

In some embodiments, each energy storage or module may be equipped with a current meter of its own. This is however not the preferred embodiment, due to the considerable hardware expense. In embodiments, in which not directly adjacent modules can be connected in parallel (with any modules in between in the bypass state), the number of current meters provided in said branch may be less than half the number of modules in said branch, and the control system may be configured to select said further energy storage that is to be connected in parallel with said given energy storage such that a current meter is arranged in a current path between poles of same polarity, and to switch each of the energy storages between said given energy storage and said further energy storage in said bypass state. Indeed, in this embodiment a single current meter per branch may be sufficient. Note that this is not the same as providing a single current meter and additional, dedicated circuitry that allows for selectively coupling the current meter with a given energy storage, since in the present case, the same switching capabilities that are used for establishing the connection states in ordinary operation are used for coupling the current meter with the given energy storage. This again demonstrates how the present invention allows for estimating a status parameter of a given energy storage with minimal additional hardware expense.

In some embodiments, only a subset of said energy storages is provided with a current meter, wherein said switching arrangement allows for selectively connecting one pole of one of said energy storages provided with a current meter with the pole of same polarity of a selected one of its two neighboring energy storages within said branch. In this case, the capability of connecting non-adjacent modules in parallel with bypassed modules in between is not necessary. In preferred embodiments, every second energy storage belongs to said subset of energy storages provided with a current meter. This way, any given one of the energy storages can be subjected to the current measurement, either using its own current meter, or the current meter of one of its neighbors, which then forms the "further energy storage" with which the given energy storage is connected in parallel to cause said current flow for determining the status parameter.

In a preferred embodiment, said control system is configured for determining said status parameter based on an equivalent circuit model of the energy storage, said equivalent circuit model representing the impedance of said energy storage and comprising at least one model resistance and at least one model capacitance. Herein, said control system is configured for determining said model resistance(s) and capacitance(s) to match said time-dependent voltage-current characteristic, and said model resistance(s) and capacitance(s) represent said status parameter or can be used for deriving the status parameter therefrom.

In a related embodiment, said equivalent circuit model comprises a series connection of a model resistance $R_0$ and a number of N model RC elements, wherein the i-th model RC element comprises a parallel connection of a resistance $R_i$ and a capacitance $C_i$, with i = 1, ...,N, wherein preferably, N=3, or N=2, or N= 1. In a preferred embodiment, said series connection further comprises a model inductance, such as a so-called "stray inductance".

In a preferred embodiment, said control system uses the status parameter of a given energy storage when selecting the connection states for this given energy storage in the operation of the energy storage system. For example, as was suggested above, energy storages having a better state of health may be selected more often for contributing to the power provided by the energy storage system than energy storages with inferior state of health, which may be more often, or even permanently, switched to the bypass connection state. This way, the ageing of the energy storages can be harmonized throughout the energy storage system, and it can be prevented that a weak energy storage lowers the performance of the energy storage system as a whole.

The energy storage system according to the first aspect can be used in many applications, and in particular with practically any MESDCS which provides for parallel connection between adjacent modules.

According to a second aspect of the invention, an energy storage system is provided that allows for estimating a status parameter for a given energy storage when connected to an electrical consumer. More precisely, the second aspect of the invention relates to an arrangement comprising an energy storage system and an electrical consumer, such as an electric motor. Said electrical consumer has a number of M phase terminals for receiving a corresponding AC phase voltage. Herein, "AC phase voltage" means that the voltage is oscillating, e.g. has a sinusoidal waveform, but it need not necessarily be bipolar (i.e need not necessarily change from positive to negative voltage).

The energy storage system according to the second aspect comprises a control system and M branches, wherein the i-th branch is associated with a corresponding i-th phase terminal of said electrical consumer, with i = 1,..., M. Each branch comprises a plurality of cascaded energy storages, wherein at least some of said energy storages are formed by a battery cell or a battery pack comprising a plurality of battery cells,

a voltage sensor associated with at least some of said energy storages for determining its voltage, and

a switching arrangement comprising a plurality of switches.

The plurality of switches of the switching arrangement are operable, under control of the control system, such as to establish a selectable connection state for each of said energy storages, said connection states being selectable from

a series connection with an adjacent energy storage, and

a bypass state.

Similar to the first aspect, said control system is configured to select and establish said connection states based on at least one of a total voltage to be generated across the branch, the current voltage and/or state of charge of an individual energy storage and a status parameter of said individual energy storage, in particular based on a power capability, a temperature and/or a state of health of said individual energy storage.

Moreover, said control system is further configured to operate said switching arrangement to carry out an estimation of a status parameter of a given energy storage located in the i-th branch using electrochemical impedance spectroscopy (EIS), by injecting AC current into said given energy storage while monitoring a time-varying voltage of said energy storage, and deriving said status parameter from the injected current and the monitored voltage, wherein said injected current is generated using energy storages of a j-th branch and is transmitted through said j-th and said i-th phase terminal of said consumer, wherein $i, j = 1,... ,M$ and $i \neq j$.

While in the first embodiment, the status parameter was derived from a time-dependent voltage-current-characteristic, i.e. in the time-domain, as a response to a current step generated when connecting two energy storages in parallel, according to the second aspect, the status parameter is derived by electrochemical impedance spectroscopy (EIS), i.e. by a response of the voltage to the injected AC current. Herein, a different branch than the one where the given energy storage is located in, together with part of the electrical consumer (i. e. the part between the i-th and i-th phase terminal), are used as an AC current source. For example, if the electrical consumer is a motor, an inductance of the motor is used for generating the AC current to be injected into the given energy storage.

However, the second aspect of the invention is not limited to applications where the consumers are electric motors. Any electrical consumer may be used, as long as it provides some appreciable inductance between the i-th and the j-th phase terminal, such that a stable AC current can be generated.

In a preferred embodiment, said control system is configured to control, during said status parameter estimation, the switching arrangement such that each of the energy storages arranged between said given energy storage and said i-th phase terminal acquire said bypass state, and preferably such that all energy storages in said i-th branch except for said given energy storage acquire said bypass state.

In a preferred embodiment, each of said branches comprises a plurality of sequentially interconnected modules, wherein each module comprises at least one first terminal and at least one second terminal, a corresponding one of said energy storages, and a plurality of module switches, wherein said module switches of said plurality of modules form said switching arrangement, wherein in each two adjacent modules, said at least one first terminal of one module is connected either directly or via an intermediate component to said at least one second terminal of the other module.

In a preferred embodiment, said energy storage system comprises M modular energy storage direct converter systems (MESDCS), wherein each MESDCS comprises a converter arm having a first end and a second end, wherein said second end is connected with a corresponding phase terminal of the electrical consumer, and wherein each MESDCS comprises a branch of sequentially interconnected modules, wherein said control system is configured for controlling the switches of the sequentially interconnected modules such as to establish, for each of said modules, connection states selected from

- said series connection with an adjacent energy storage, and
- said bypass state,

such as to provide said phase voltage to said phase terminal of said electrical consumer.

In a preferred embodiment, said second ends of said converter arms are connected with each other, thereby forming a star configuration. In an alternative embodiment, the second end of each converter arm is connected to a first end of another converter arm, such that the converter arms form a ring topology. In preferred embodiments, the number M of phase terminals is 3, leading to the so-called Delta-topology.

Note that unlike the first aspect of the invention, where a selectable parallel connection of at least adjacent energy storages was necessary, this is not an essential feature for the second aspect of the invention. However, in preferred embodiments, said control system is nevertheless configured for controlling the switches of the sequentially interconnected modules such as to additionally selectively establish, for each of said modules, a parallel connection state, in which said energy storage is connected in parallel with the energy storage of an adjacent module.

In other embodiments, each of said branches comprises a reconfigurable battery system and an inverter, wherein said control system is configured for controlling said inverter such as to apply said phase voltage to the corresponding phase terminal of said electrical consumer, and

in which the control system is configured to dynamically select and establish, for each of said energy storages, connection states selected from

- said series connection with an adjacent energy storage,
- a parallel connection with an adjacent energy storage, and
- said bypass state,

wherein said control system is configured to make said selection based on at least one of the current voltage and/or state of charge and a status parameter of individual ones of said energy storages, in particular a power capability, a temperature and/or a state of health.

Similar as in the first aspect of the invention, each of said modules may have at most four module switches, and preferably three module switches.

Herein, each module may have two first terminals and two second terminals,

wherein each energy storage has a first pole connected or connectable with one of the first terminals and a second pole connected or connectable with the other one of the first terminals,

and wherein said plurality of module switches comprise

- a first switch having a first switch terminal connected with one of the second terminals of the module and a second switch terminal connected or connectable with the first pole of said energy storage,
- a second switch having a first switch terminal connected with the other one of the second terminals of the module and a second switch terminal connected or connectable with the second pole of said energy storage, and
- a third switch provided in a connection line connecting the first switch terminal of the first switch and the second switch terminal of the second switch,

said module allowing for connecting its energy storage in series with the energy storage of an adjacent module connected to its second terminals by opening the first and second switches and closing the third switch, and for connecting its energy storage in parallel with the energy storage of an adjacent module connected to its second terminals by closing the first and second switches and opening the third switch.

As in the first aspect of the invention, each module may further comprise a fourth switch connected either between the first pole of said energy storage and the second switch terminal of the first switch, or between the second pole of said energy storage and the second switch terminal of the second switch,

said fourth switch allowing for bypassing the energy storage of a given module in a series or parallel connection of storage/energy conversion elements of adjacent modules connected to the first terminals and second terminals of said given module, respectively.

In a preferred embodiment, said plurality of module switches allow for connecting energy storages of adjacent modules in anti-series, wherein the anti-series connection of an energy storage corresponds to a series connection with reversed polarity. In addition or alternatively, said plurality of modules preferably further allow for bypassing the energy storage of a given module in a series or parallel connection of energy storages of adjacent modules connected to the first terminals and second terminals of said given module, respectively.

In a preferred embodiment, said estimation of said status parameter of a given energy storage using electrochemical impedance spectroscopy (EIS) comprises injecting oscillating, in particular sinusoidal currents of various frequencies to said given energy storage. In preferred embodiments, the control system comprises a PR controller for generating the oscillating currents. Preferably, the estimation further comprises determining a frequency-dependent impedance based, at least in part, on a relation of the injected current, the monitored voltage of said given energy storage and a phase shift between said injected current and said monitored voltage for each of said various frequencies.

In a preferred embodiment, said control system is configured for determining said status parameter based on an equivalent circuit model of the energy storage, said equivalent circuit model representing the impedance of said energy storage and comprising at least one model resistance and at least one model capacitance. Herein, said control system is configured for determining said model resistance(s) and capacitance(s) to match a measured frequency dependent current-voltage relationship, and wherein said model resistance(s) and capacitance(s) represent said status parameter or can be used for deriving the status parameter therefrom.

In a related embodiment, said equivalent circuit model comprises a series connection of a model resistance $R_O$ and a number of N model RC elements, wherein the i-th model RC element comprises a parallel connection of a resistance Ri and a capacitance $C_i$, with i = 1, ...,N, wherein preferably, N= 2, or N= 3, or N= 4. Herein, said series connection preferably further comprises a model inductance.

Similar as in the first aspect, said control system may use the status parameter of a given energy storage when selecting the connection states for this given energy storage in the operation of the energy storage system.

In a preferred embodiment, a current meter is associated with each phase terminal of said electrical consumer. in conventional electric motors, such a current meter is typically provided anyhow, such that no additional hardware has to be provided to carry out the invention according to the second aspect.

A further aspect of the invention relates to a method of estimating a status parameter of a given energy storage in an energy storage system, wherein said energy storage system comprises a branch comprising a plurality of cascaded energy storages, at least some of said energy storages being formed by a battery cell or a battery pack comprising a plurality of battery cells and a switching arrangement comprising a plurality of switches. The plurality of switches of said switching arrangement are operable such as to establish a selectable connection state for each of said energy storages, said connection states being selectable from a series connection with an adjacent energy storage,

a parallel connection with an adjacent energy storage, and

a bypass state.

The method further comprises a step of carrying out an estimation of a status parameter of a given energy storage by operating said switching arrangement such as to connect said given energy storage and a further energy storage in parallel, to thereby cause a current flow into or out of said given energy storage, measuring said current flow and a voltage of said given energy storage, and determining said status parameter based on a time-dependent voltage-current-characteristic.

Herein, as before, said status parameter may be one of a power capability, a temperature and/or a state of health of said individual energy storage (16), and said method preferably further comprises selecting and establishing connection states in operation of said energy storage system such as to generate a predetermined voltage across the branch, wherein said selecting of connection states is based, at least in part, on the status parameter of said energy storages.

In preferred embodiments of this method, the energy storage system is an energy storage system according to one of the embodiments of the energy storage system according to the first aspect, wherein said method is carried out under control of the control system thereof.

In a preferred embodiment of the method, in said step of connecting said given energy storage and a further energy storage in parallel, at least one intermediate energy storage is arranged between said given energy storage and said further energy storage, and wherein the method further comprises a step of operating said switching arrangement such as to establish said bypass state for said at least one intermediate energy storage.

In a preferred embodiment of the method, said status parameter is determined based on an equivalent circuit model of the energy storage, said equivalent circuit model representing the impedance of said energy storage and comprising at least one model resistance and at least one model capacitance, wherein said method comprises determining said model resistance(s) and capacitance(s) to match said time-dependent voltage-current characteristic, and wherein said model resistance(s) and capacitance(s) represent said status parameter or are used for deriving the status parameter therefrom.

In a related embodiment, said equivalent circuit model comprises a series connection of a model resistance $R_O$ and a number of N model RC elements, wherein the i-th model RC element comprises a parallel connection of a resistance Ri and a capacitance $C_i$, with i = 1, ...,N, wherein preferably, N=3, or N=2, or N= 1, wherein preferably, said series connection further comprises a model inductance.

A further aspect of the invention relates to an alternative method of estimating a status parameter of a given energy storage in an arrangement comprising an energy storage system and an electrical consumer, in particular electric motor, wherein said electrical consumer has a number of M phase terminals for receiving a corresponding AC phase voltage, wherein said energy storage system comprises M branches, wherein the i-th branch is associated with a corresponding i-th phase terminal of said electrical consumer, with i = 1,..., M, wherein each branch comprises a plurality of cascaded energy storages, at least some of said energy storages being formed by a battery cell or a battery pack comprising a plurality of battery cells, and a switching arrangement comprising a plurality of switches.

Herein, said plurality of switches of said switching arrangement are operable such as to establish a selectable connection state for each of said energy storages, said connection states being selectable from

a series connection with an adjacent energy storage, and

a bypass state.

Moreover, said method further comprises a step of carrying out an estimation of a status parameter of a given energy storage located in the i-th branch using electrochemical impedance spectroscopy (EIS), by operating said switching arrangement such as to inject AC current into said given energy storage while monitoring a time-varying voltage of said energy storage, and deriving said status parameter from the injected current and the monitored voltage, wherein said injected current is generated using energy storages of a j-th branch and transmitted through said j-th and said i-th phase terminal of said consumer, wherein i, j = 1,... ,M and i≠ j.

In a preferred embodiment of this method, said status parameter is one of a power capability, a temperature and/or a state of health of said individual energy storage. Moreover, said method preferably further comprises selecting and establishing connection states in operation of said energy storage system such as to generate a predetermined voltage across each branch, wherein said selecting of connection states is based, at least in part, on the status parameter of said energy storages.

In a preferred embodiment of this method, said energy storage system is any one of the energy storage systems according to the second aspect described above.

In a preferred embodiment of this method, said step of estimating said status parameter of a given energy storage using electrochemical impedance spectroscopy comprises injecting oscillating, in particular sinusoidal currents of various frequencies to said given energy storage. The oscillating current is preferably generated using a PR controller. Moreover, the estimating preferably further comprises determining a frequency-dependent impedance based, at least in part, on a relation of the injected current, the monitored voltage of said given energy storage and a phase shift between said injected current and said monitored voltage for each of said various frequencies.

In a preferred embodiment of this method, said status parameter is determined based on an equivalent circuit model of the energy storage, said equivalent circuit model representing the impedance of said energy storage and comprising at least one model resistance and at least one model capacitance, wherein said control system is configured for determining said model resistance(s) and capacitance(s) to match a measured frequency dependent current-voltage relationship, and wherein said model resistance(s) and capacitance(s) represent said status parameter or can be used for deriving the status parameter therefrom.

Herein, said equivalent circuit model preferably comprises a series connection of a model resistance $R_o$ and a number of N model RC elements, wherein the i-th model RC element comprises a parallel connection of a resistance Ri and a capacitance $C_i$, with i = 1, ...,N, wherein preferably, N= 2, or N= 3, or N= 4, wherein preferably, said series connection further comprises a model inductance.

SHORT DESCRIPTION OF THE FIGURES

Fig. 1          is a schematic view of a conventional block battery pack with passive balancing.
Fig. 2          is a module for use in an MESDCS or RBS in some embodiments of the invention, allowing for series, anti-series, parallel and bypass connection states.
Fig. 3          is a module similar to that of Fig. 2, with an additional switch allowing for connecting non-adjacent modules in parallel with intermediate modules in the bypass connection state.
Fig. 4          shows on the left a module having only three switches, allowing for series, parallel and bypass connection states, and on the right a similar module having one additional switch, allowing for connecting non-adjacent modules in parallel with intermediate modules in the bypass connection state.
Fig. 5          shows cascaded connections of the modules of Fig. 4 forming a branch of an MESDCS or RBS.
Fig. 6          shows an RBS/MESDCS formed of cascaded three switch modules.
Fig. 7, 8       show series and parallel connection states, respectively, of energy storages of the RBS/MESDCS of Fig. 6.
Fig. 9          shows an arrangement comprising an energy storage system comprising three MESDCS and an electric motor.
Fig. 10         shows a detailed structure of one of the MESDCS of Fig. 9.
Fig. 11         shows an equivalent circuit for an energy storage used in one embodiment of the invention.
Fig. 12         shows the waveform of a current step applied to an energy storage.
Fig. 13         shows a voltage response to the current step of Fig. 12 obtained by measurement and by simulation using the equivalent circuit of Fig. 11.
Fig. 14         shows a waveform of an approximated current step caused by parallel connection of energy storages having different SOC.
Fig. 15         shows a voltage response to the current waveform of Fig. 14 determined by measurement and by simulation using the equivalent circuit of Fig. 11.

Fig. 16, 17    show possible arrangements of current meters in an RBS/MESDCS of the type shown in Fig. 6.

Fig. 18    shows a possible arrangement of a current meter in an RBS/MESDCS similar to that of Fig. 6, but with a fourth switch per module.

Fig. 19    is a plot showing the impedance of a battery cell at different frequencies for an SOC of about 50%.

Fig. 20    shows an arrangement of two MESDCS connected to two corresponding phase terminals of an electric motor.

Fig. 21    shows an equivalent circuit for an energy storage used in an embodiment of the invention.

Fig. 22    shows a monitored battery cell current and voltage oscillation for impedance spectroscopy.

Fig. 23    schematically illustrates the implementation of a PR controller to conduct an on-board electrochemical impedance spectroscopy.

Fig. 24    is a table summarizing parameters obtained from an equivalent circuit model of a battery impedance.

DESCRIPTION OF THE PREFERRED EMBODIMENTS

It is to be understood that both the foregoing general description and the following description are exemplary and explanatory only and are not restrictive of the methods and devices described herein. In this application, the use of the singular may include the plural unless specifically state otherwise. Also, the use of "or" means "and/or" where applicable or unless stated otherwise. Those of ordinary skill in the art will realize that the following description is illustrative only and is not intended to be in any way limiting. Other embodiments will readily suggest themselves to such skilled persons having the benefit of this disclosure. Reference will now be made in detail to various implementations of the example embodiments as illustrated in the accompanying drawings. The same reference signs will be used to the extent possible throughout the drawings and the following description to refer to the same or like items.

In Fig. 6, an RBS 20 is schematically shown, which represents an example of an energy storage system of the invention. An energy storage system 20 of similar structure has been referred to as a "battery modular multilevel management" (BM3) system and for example described in F. Helling, S. Götz, and T. Weyh, "A battery modular multilevel manage- ment system (BM3) for electric vehicles and stationary energy storage systems," in 2014 16th European Conference on Power Electronics and Applications, Aug 2014, pp. 1-10, as well as in M. Kuder, J. Schneider, A. Kersten, T. Thiringer, R. Eckerle, and T. Weyh, "Battery modular multilevel management (BM3) converter applied at battery cell level for electric vehicles and energy storages," in PCIM Europe 2020; International Exhibition and Conference for Power Electronics, Intelligent Motion, Renewable Energy and Energy Management, 2020, pp. 1726-1733.

The RBS 20 of Fig. 6 features a branch or "strand" comprising a plurality of cascaded energy storages 16, which in the shown embodiment are formed by individual battery cells, and a switching arrangement comprising a plurality of switches 18. The RBS 20 has a modular structure, with an individual module 10 highlighted in Fig. 7. As is seen therein, each module 10 has two first terminals 12, two second terminals 14 and three switches 18, and an overall topology equivalent to that shown in Fig. 4. The module switches 18 of the individual modules 10 together form the switching arrangement of the RBS 20. Note that the term "module" has a broad meaning herein, and does not necessarily mean that the energy storage system comprises discrete modules in the form of separate physical entities manufactured individually and subsequently connected with each other. Instead, the modules can also be functional subgroups of a hardwired circuit. Nevertheless, building up an energy storage system from prefabricated individual modules may have advantages with regard to manufacturing, flexible design of individual energy storage systems requiring different numbers of modules, and maintenance, since individually fabricated modules with weak energy storages can be easily substituted.

With further reference to Fig. 8, in more detail, the energy storage 16 has a first pole 16a connected with one of the first terminals 12 and a second pole 16b connected with the other one of the first terminals 12. The module switches 18 comprise a first switch 18.1 having a first switch terminal 18a connected with one of the second terminals 14 of the module 10 and a second switch terminal 18b connected with the first pole 16a of said energy storage 16, a second switch 18.2 having a first switch terminal 18a connected with the other one of the second terminals 14 of the module 10 and a second switch terminal 18b connected with the second pole 16b of said energy storage 16, and a third switch 18.3 provided in a connection line connecting the first switch terminal 18a of the first switch 18.1 and the second switch terminal 18b of the second switch 18.2. It is hence seen that the module 10 allows for connecting its energy storage 16 in series with the energy storage 16 of an adjacent module 10 connected to its second terminals 14 by opening the first and second switches 18.1, 18.2 and closing the third switch 18.3, and for connecting its energy storage 16 in parallel with the energy storage 16 of an adjacent module 10 connected to its second terminals 14 by closing the first and second switches 18.1, 18.2 and opening the third switch 18.3.

The module switches 18 can hence be used to dynamically alter the connections between adjacent battery cells 16/modules 10. In this way, series or parallel connections can be dynamically formed, as shown in Fig. 7 or 8, respectively, or individual cells 16 can be bypassed. These connection states can be selected and established under the control of a control system (not shown). The control system can be formed by a control unit, or by a plurality of control units that are communicationally coupled by signal lines or wireless links. The control system or control unit(s) may be embodied in hardware, in software, or both. In particular, the control system may comprise one or more microprocessors, ASICs or the like.

With the switching capability and switching control provided by the control system, a dedicated battery management system (BMS) becomes obsolete. An RBS is normally operated with an additional, dedicated propulsion inverter. However, by appropriate selection of the various connection states of the battery cells 16/modules 10 by the control system, the voltage generated across the branch can be controlled, such that the RBS could be operated as a direct converter. Accordingly, a sharp distinction from an MESDCS is not possible.

Fig. 9 shows an example of an arrangement comprising an energy storage system 20 and an electrical consumer, in this case an electric motor 24. The electric motor 24 has three phase terminals 26 for receiving a corresponding AC voltage. As mentioned before, as understood herein, the "AC voltage" does not imply that the voltage is necessarily bipolar. Also shown are stator inductances $L_{\sigma,S}$ of the electric motor 24. The energy storage system 20 in this case comprises three branches of cascaded energy storages 16 each associated with a corresponding one of the phase terminals 26. In the embodiment of Fig. 9, the energy storages 16 are formed of dedicated battery packs with a moderate number of series connected battery cell strings. Each battery pack is equipped with a passive balancing circuit. Due to the limited number of series connected battery cells, the balancing effort is not as large as for high voltage battery packs.

More precisely, the energy storage system 20 of Fig. 9 comprises three modular energy storage direct converter systems (MESDCS) 28, wherein each MESDCS 28 comprises a converter arm having a first end 30 and a second end 32. The second end 32 of each MESDCS 28 is connected with a corresponding phase terminal 26 of the motor 24, while the first ends 30 are connected at a common star point 34. Each MESDCS 28 comprises a branch of sequentially interconnected modules 10 comprising a plurality of module switches (not shown in the schematic view of Fig. 9), and the energy storage system 20 as a whole comprises a control system (not shown) which is configured for controlling the switches of the sequentially interconnected modules 10 such as to establish, for each of said modules 10, connection states selected from at least a series connection with an adjacent energy storage 16 and a bypass state, such as to provide a desired AC phase voltage to the corresponding phase terminal 26 of the motor 24.

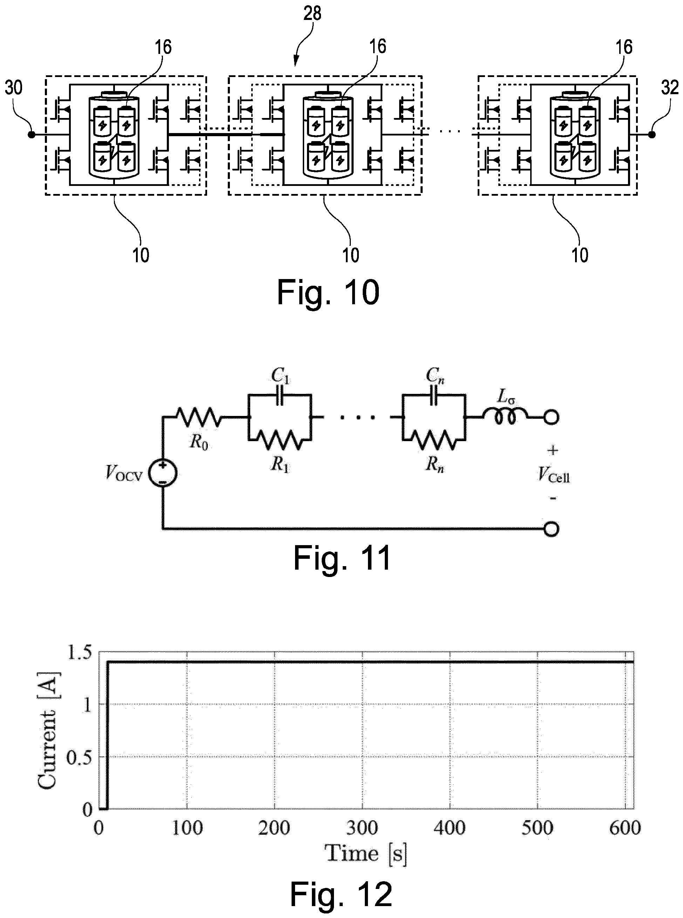

Depending on the topology of the module 10 employed, further connection states can be available. For example, the modules 10 could be of the type shown in Fig. 6 to 8, having two first and two second terminals 12, 14 and allowing for a an additional parallel connection state. In the alternative, the modules 10 could be of the type shown in Fig. 2, with a corresponding MESDCS 28 shown in Fig. 10. Such type of MESDCS 28 has also been referred to as a "modular multilevel series parallel inverter (MMSP)" or "modular multilevel parallel converter split battery system (M2B)" in articles by some of the present inventors, see A. Kersten, M. Kuder, E. Grunditz, Z. Geng, E. Wikner, T. Thiringer, T. Weyh, and R. Eckerle, "Inverter and battery drive cycle efficiency comparisons of CHB and MMSP traction inverters for electric vehicles," in 2019 21st European Conference on Power Electronics and Applications (EPE '19 ECCE Europe), Sep. 2019, pp. P.1-P.12 and in A. Singer, F. Helling, T. Weyh, J. Jungbauer, and H. Pfisterer, "Modular multilevel parallel converter based split battery system (m2b) for stationary storage applications," in 2017 19th European Conference on Power Electronics and Applications (EPE'17 ECCE Europe), Sep. 2017, pp. P.1-P.10. The MESDCS 28 of Fig. 10 allows for dynamically inserting the battery packs 16 in forward or reverse direction, i.e. in the "series" and "anti-series connection state", in addition to the bypass parallel connection states.

A simplified version of the modules of Fig. 10 is obtained if the outermost half bridges within the module 10 which are shown with dashed lines are omitted, such that an H-bridge topology remains. The corresponding MESDCS has therefore also been referred to as the "cascaded H-bridge (CHB)" in the art. The CHB design allows for series, anti-series and bypassed connection states, but not for parallel connection.

Note that these specific module topologies are only exemplary, and that other types of modules may be employed that provide the functionalities referred to in the claims.

In preferred embodiments of both, the first and second aspect of the invention, the control system is configured for determining the status parameter of a given energy storage 16 based on an equivalent circuit module of the energy storage.

Several battery equivalent circuit models based on RC-networks have been suggested in prior art. In preferred embodiments of the invention, the so-called Randles model shown in Fig. 11 is used, as it has been found by the inventors to describe the electric dynamics of relevant types of batteries particularly well. While in the following reference will be made to the "battery model" or "battery impedance" for simplicity, the corresponding disclosure is understood to also relate to models for "energy stores" in general, e. g. also for battery packs such as the battery packs 16 shown in Fig. 9 and 10, without further mention. With the help of the battery impedance the maximum power limit of the battery cell can be determined and, as a function over time, the battery ageing can be assessed. Furthermore, as described in O. Theliander, A. Kersten, M. Kuder, E. Grunditz, and T. Thiringer, "Lifep04battery modeling and drive cycle loss evaluation in cascaded h-bridge inverters for vehicles," in 2019 IEEE Transportation Electrification Conference and Expo (ITEC), June 2019, pp. 1-7 and A. Kersten, M. Kuder, E. Grunditz, Z. Geng, E. Wikner, T. Thiringer, and T. Weyh, and R. Eckerle, "Inverter and battery drive cycle efficiency comparisons of chb and mmsp traction inverters for electric vehicles," in 2019 21st European Conference on Power Electronics and Applications (EPE '19 ECCE Europe), Sep. 2019, pp. P.1-P.12, simple energy calculations can be performed using the equivalent circuit models.

The impedance of the Randles model in the s-domain can be mathematically described as

$$\overline{Z}_{\text{Cell}}(s) = R_0 + \frac{R_1}{s + R_1 C_1} + \cdots + \frac{R_n}{s + R_n C_n} + s L_{\sigma,b}$$

$$(1)$$

When neglecting the stray inductance $L_{\sigma,b}$, (1) can be rewritten in transfer function form as

$$\overline{Z}_{\text{Cell}}(s) = \frac{b_n s^n + b_{n-1} s^{n-1} + \cdots + b_1 s + b_0}{s^n + a_{n-1} s^{n-1} + \cdots + a_1 s + a_0}$$

$$(2)$$

Using its corresponding poles $p = \{p_n, p_{n-1}, p_{n-2} \dots p_1\}$ and zeros $z = \{z_n, z_{n-1}, z_{n-2} \dots z_1\}$, the cell impedance term or transfer function becomes

$$\overline{Z}_{\text{Cell}}(s) = b_n \frac{(s - z_n)(s - z_{n-1}) \dots (s - z_1)}{(s - p_n)(s - p_{n-1}) \dots (s - p_1)}$$

$$(3)$$

The selection of the number of RC-links n depends on the actual application to be described by the model. For example, as described in the above referenced article *"Lifep04battery modeling and drive cycle loss evaluation in cascaded h-bridge inverters for vehicles"* co-authored by one of the inventors, when used for energy calculations of CHB propulsion inverters it can be advantageous to choose up to three RC pairs.

**A. Parameter Extraction using a Pulsed Current**

A possible way to determine the parameters of the transfer function in (3) is the time-domain parameter extraction using current and voltage waveforms of the battery cell under test. Using an adaptive control approach, the determination can be directly applied during the operation of a vehicle, as suggested in the above referenced article *"Online estimation of internal resistance and open-circuit voltage of lithium-ion batteries in electric vehicles"* by Y.-H. Chiang *et al.* However, due to the dynamics of the drive train it might be more suitable to apply just a defined current step during stand-still. Hence, the transfer function can easily be parametrized using a generic least-square fit approach. Numerical curve fitting computer tools can be used for this purpose. The equivalent circuit parameters, neglecting the stray inductance and using three RC pairs, can then be extracted as described in the following. From the poles $p_i$, the system's time constants $\tau_i$ can be calculated according to

$$\begin{bmatrix} \tau_1 \\ \tau_2 \\ \tau_3 \end{bmatrix} = - \begin{bmatrix} 1/p_1 \\ 1/p_2 \\ 1/p_3 \end{bmatrix}$$

$$(4)$$

Knowing the time constants $\tau_i$, a matrix $A$ can be created according to

$$A = \frac{1}{\tau_1 \tau_2 \tau_3} * \begin{bmatrix} \tau_1 \tau_2 \tau_3 & 0 & 0 & 0 \\ \tau_1 \tau_2 + \tau_1 \tau_3 + \tau_2 \tau_3 & \tau_2 \tau_3 & \tau_1 \tau_3 & \tau_1 \tau_2 \\ \tau_1 + \tau_2 + \tau_3 & \tau_2 + \tau_3 & \tau_1 + \tau_3 & \tau_1 + \tau_2 \\ 1 & 1 & 1 & 1 \end{bmatrix}$$

$$(5)$$

which can be used to calculate the equivalent circuit resistances as

$$\begin{bmatrix} R_0 \\ R_1 \\ R_2 \\ R_0 \end{bmatrix} = A^{-1} \begin{bmatrix} b_3 \\ b_2 \\ b_1 \\ b_0 \end{bmatrix}$$

$$(6)$$

The capacitances can now be calculated as

$$\begin{bmatrix} C_1 \\ C_2 \\ C_3 \end{bmatrix} = \begin{bmatrix} \tau_1 & 0 & 0 \\ 0 & \tau_2 & 0 \\ 0 & 0 & \tau_3 \end{bmatrix} \begin{bmatrix} R_1 \\ R_2 \\ R_3 \end{bmatrix}$$

$$(7)$$

If the Randles model is used with two or one time constants, the parameters can be calculated in a similar way from the least-square fit.

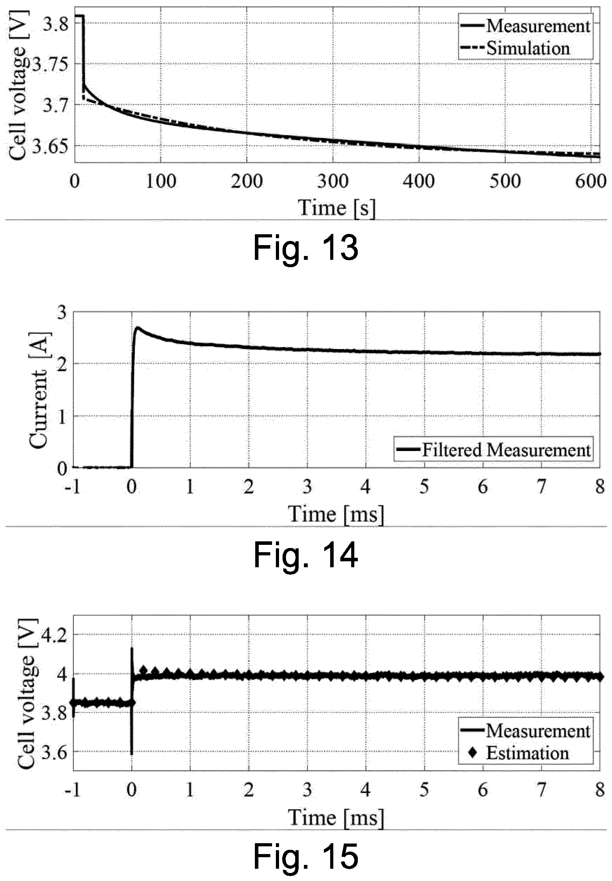

For example, Fig. 12 shows a 0.5C pulse applied to a single 18650 battery cell taken from LG Chem, "Battery Cell - Product Description: ICR18650 C2 2800mAh," https://www.batteryspace.com/prod-specs/5702 5.pdf, *(Accessed on 05/04/2019)*. Meanwhile, the battery voltage drop is monitored as depicted in Fig. 13 by the solid line. Using MATLAB's system identification toolbox and, for simplification, considering just one RC pair, the cell impedance was determined to be

$$\overline{Z}_{\text{Cell}}(s) = \frac{0.07251s + 0.0005935}{s + 0.004811}$$

$$(8)$$

which can be rearranged to the pole-zero form as

$$\overline{Z}_{\text{Cell}}(s) = 0.07251 \frac{s + 0.0082}{s + 0.004811}$$

$$(9)$$

Thus, the time constant $\tau_i$ can be calculated using the system pole as

$$\tau_1 = -\frac{1}{p_1} = 207.86 \, s$$

$$(10)$$

and the A-matrix becomes

$$A = \frac{1}{\tau_1} * \begin{bmatrix} \tau_1 & 0 \\ 1 & 1 \end{bmatrix}$$

$$(11)$$

Consequently, the equivalent circuit resistances can be calculated as follows:

$$\begin{bmatrix} R_0 \\ R_1 \end{bmatrix} = A^{-1} \begin{bmatrix} b_1 \\ b_0 \end{bmatrix} = \begin{bmatrix} 1 & 0 \\ -1 & \tau_1 \end{bmatrix} \begin{bmatrix} b_1 \\ b_0 \end{bmatrix}$$

$$(12)$$

$$R_0 = b_1 = 72.5 \, m\Omega$$

$$(13)$$

$$R_1 = b_0\tau_1 - b_1 = 51 \, m\Omega$$

$$(14)$$

Last, the equivalent circuit capacitance can be calculated as

$$C_1 = \frac{\tau_1}{R_1} = 4.08 \, kF$$

$$(15)$$

The simulated voltage drop, using the extracted parameters, can be seen in Fig. 13 by the broken line. Since only one RC pair was employed in the model, the simulated voltage drop slightly differs from the measurement in the beginning of the current step.

**B. Parameter Extraction using Balancing Current**

Considering the MESDCS or RBS topologies as shown in Fig. 6, 9 and 10, according to the first aspect of the invention, the battery parameters are extracted using the balancing current between battery cells 16/modules 10 when in parallel operation.

As the skilled person will appreciate, in case of different states of charge (SOCs) of neighboring energy storages 16, a difference in their voltages can be observed. Thus, when paralleling energy storages 16 with different SOCs, charges, in form of an electric current, are automatically transferred from the energy storage 16 with the higher SOC to the one with the lower SOC. Similar as for an applied current pulse, with the help of the monitored balancing current and the battery voltages, the transfer function in (1) can be parameterized. To demonstrate this approach, a laboratory, small-scale setup of a reconfigurable battery system of the type shown in Fig. 6 was built by the inventors. Two H-bridges, each equipped with one battery cell, were connected.

During a simple test, the battery cells were switched from the series to the parallel connection. The (filtered) waveform of the measured balancing current, when paralleling both battery cells (initially, $V_{\text{Cell},1}$ =3.85 V and $V_{\text{Cell},2}$ =4.14 V), can be seen in Fig. 14. It should be noted that the battery current flows from the second to the first cell. The current looks similar to a proper current step, except for the overshoot in the beginning. Furthermore, the measured battery voltage of the first cell can be seen in Fig. 15 as the solid line. Due to the noise of the voltage probe, the voltage signal needed to be filtered. Again, using MATLAB's system identification toolbox, similar as described in (8) to (12), the equivalent circuit parameters of the battery were determined as

$$R_0 = 62.5 \, m\Omega; \, R_1 = 60.1 \, m\Omega \, and \, C_1 = 3.42 \, kF$$

$$(16)$$

Consequently, using equation (16), the battery voltage was simulated as can be seen in Fig. 15 by the diamond symbols. Similar as for the before analyzed current step response, the model using just one RC pair slightly overestimates the voltage swing during the switching transient, while the steady state voltage drop is accurately estimated. The proposed technique can be easily extended to multiple RC pairs.

Nonetheless, the basic principle of the battery parameter estimation using the balancing current between parallel connected energy storages 16 could be validated. Consequently, the presented estimation approach could be implemented for any multilevel inverter or reconfigurable battery system, which allows for dynamic paralleling of battery cells/modules.

The above description is to be understood as illustrating the invention, but not limiting the same. It has been demonstrated that by monitoring the time dependent current-voltage characteristic associated with a parallel connection of two energy storages 16 of different voltage, the impedance of a given energy storage 16 can be determined, which in turn can be used as a status parameter for the given energy storage 16, or can be used to derive a status parameter of interest therefrom. While it has hence been shown that useful information about the status of the energy storage 16 is contained in the time-dependent current-voltage characteristic obtainable by parallel connection of energy sources 16, the skilled person will appreciate that there are many different ways for extracting this information from the current-voltage characteristic, and in practical applications, it may not be necessary to explicitly calculate any impedance values. Instead, the current-voltage characteristic can be subjected to a suitable algorithm, in particular a machine learning based algorithm, that rapidly extracts the status parameter therefrom.

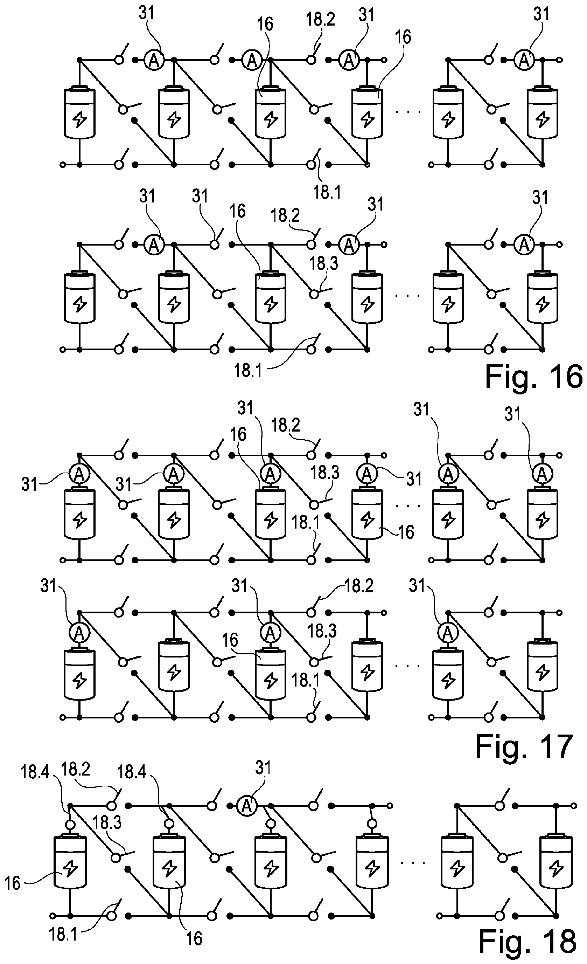

Note that the battery parameter estimation can be used without significant additional hardware expense. The procedure relies on voltage sensors and switching capability provided anyhow in the MESDCS/RBS. For implementing this parameter estimation, it is only necessary to provide for current meters that allow for measuring the current flowing into or out of a given energy storage 16. Fig. 16 shows two MESDCS/RBS of the type shown in Fig. 6, where in the upper one a dedicated current meter 31 is associated with each energy storage 16. However, it is seen that it is actually sufficient if a current meter 31 is associated with every second energy storage 16, as is shown in the lower MESDCS/RBS of Fig. 16. Herein, the current meter 31 is arranged directly adjacent to one of the switches 18 of the module that is used for the parallel connection, such as the first switch 18.1. Obviously, the current meter could be arranged at the other side of the first switch 18.1, or could be arranged to either side of the other switch used for parallel connection, i.e. the second switch 18.2.

Fig. 17 shows an alternative embodiment, in which the current meter 31 is arranged directly adjacent to one of the poles of the energy storage 16. Obviously, the current meter 31 could be arranged directly adjacent to the other pole. Moreover, in this case too, it is sufficient if every other energy storage 16/module 10 is provided with a current meter 31.

Fig. 18 shows a yet further embodiment, in which only a single current meter 31 is used. In this case, each of the modules 14 has four switches 18, where the fourth switch 18.4 allows for connecting non-adjacent energy storage 16/modules 10 in parallel, with the intermediate energy storages 16 deactivated or bypassed by opening the fourth switch 18.4. Then, for any given energy storage 16 that is to be examined, one of the energy storages 16 located on the other side of the current meter 31 is selected for parallel connection, with all of the intermediate energy storages 16 bypassed.

**C. Parameter Extraction using Impedance Spectroscopy**

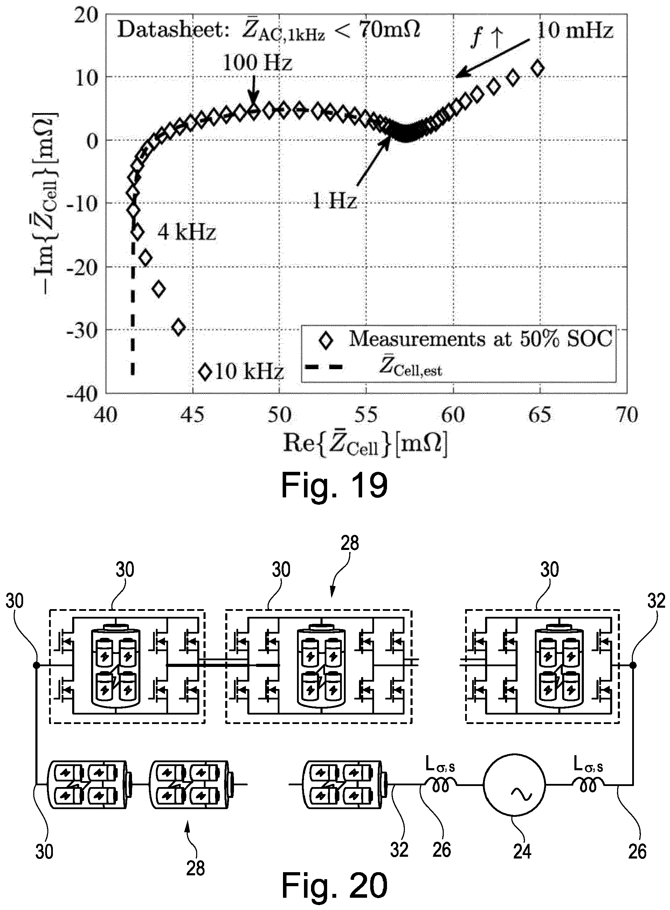

Another way to extract the equivalent circuit parameters of an energy storage 16 employed according to embodiments of the second aspect of the invention is the electrochemical impedance spectroscopy (EIS). For this method, an AC current, such as a sinusoidal current with a certain frequency is injected into the energy storage 16, while its voltage oscillation is monitored. Thus, the impedance for the selected frequency can in one embodiment be calculated using the relation of the injected current, monitored voltage and their phase shift. Using a frequency sweep, the impedance can be determined for a broad frequency range. For example, Fig. 19 shows an EIS performed at a single battery cell, again taken from LG Chem, "Battery Cell - Product Description: ICR18650 C2 2800mAh, using the battery analyzer Gamry Reference 3000 (Gamry Instruments, "Gamry reference 3000 - electrochemical measurement device," https://www.gamry.com/potentiostats/reference-3000/, (Accessed on 03/04/2020)). The battery was mounted on a fixture to have a low contact resistance.

The obtained impedances for a frequency range from 10 mHz to 10 kHz can be seen in Fig. 19. The impedance is highly dependent on the SOC. However, in the neighborhood of an SOC of about 50 % the impedance deviation relative to the SOC is not that significant. Therefore, the impedance is preferably extracted for characteristic SOC of about 50 %.

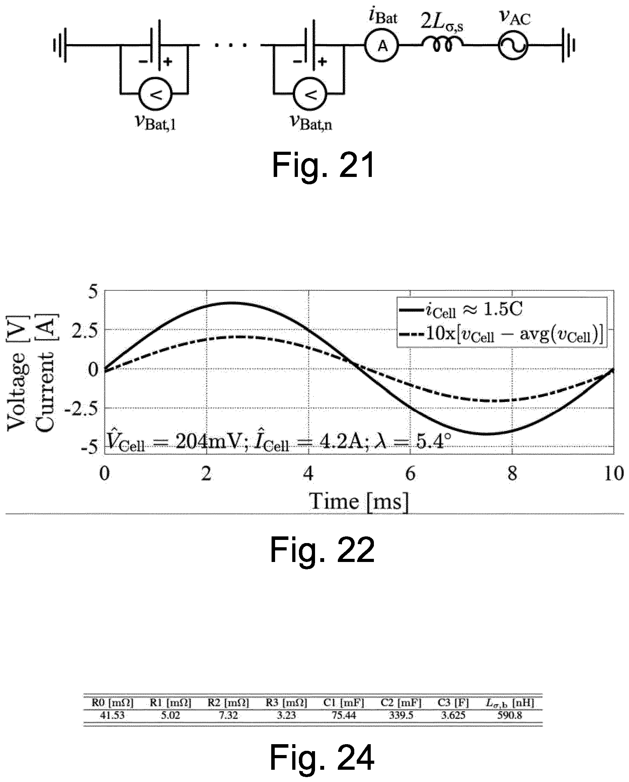

To determine the equivalent circuit parameters of the battery model, a least square fit was used, considering three RC pairs, to match the impedance within a frequency range from 1 Hz to about 4 kHz. The obtained parameters can be seen in the table shown in Fig. 24, and the impedance is plotted as the broken line in Fig. 19.

In comparison to the parameter extraction in time-domain, the resistance $R_o$ is slightly smaller. This is due to the fact that the electric impedance spectroscopy considers a broader frequency range up to several kHz, whereas the parameter extraction in time-domain, depending on the length of the current step, focuses rather on the low frequency range. Indeed, as can be seen from Fig. 19, the real part of the impedance significantly increases when approaching 0 Hz.

**D. Parameter Extraction using Impedance Spectroscopy by Converter Rearrangement and Utilization of Motor Inductance**

Considering the MESDCS or RBS topologies as shown in Fig. 6 to 10, an on-board impedance spectroscopy has been conceived utilizing the motor inductance and a part of the MESDCS or RBS as a voltage source. For example, Fig. 20 shows the arrangement of MESDCS 28 for a motor 24 load in star-connection. If the motor 24 would be operated in delta connection, i.e. with a ring topology, the same principle could be applied, whereas the effective inductance value would become $0.667 L_{\sigma,s}$ instead of $2 L_{\sigma,s}$.

In Fig. 20, two MESDCS 28 are shown, each comprising a converter arm having a first end 30 and a second and 32, wherein the first ends 30 are connected with each other and wherein the second ends 32 are connected with a corresponding phase terminal 26 of the motor 24. In the upper MESDCS 28, the modules 10 are shown in detail, while for simplicity, in the lower MESDCS 28, only the energy storages 16 are shown *pars pro toto.*

According to the second aspect of the invention, one of the MESDCS 28 may be used as a dynamic voltage source to inject a sinusoidal current into a given energy storage 16 of the other MESDCS 28, the status parameters of which is to be determined by EIS. To properly control a sinusoidal current waveform, a motor inductance is used. More precisely, assuming that the given energy storage 16 is located in a first MESDCS 28 and a second MESDCS 28 is used as the current source for EIS, the control system (not shown) controls the module switches 18 such that all modules 10 arranged in the first MESDCS 28 between the given energy storage 16 and the first phase terminal 26 are in the bypass state, and preferably, such that all modules 10 except for said given module 10 within the first MESDCS 28 are in the bypass state. Note that when referring to determining the status parameters of an individual "given energy storage" 16, this is also meant to include the case that the status parameter of a group of energy storages is determined, i.e. the "given energy storage" 16 may be a member of a "given group of energy storages" 16 whose status parameters are to be determined. Moreover, the control system controls the modules of the second MESDCS 28 such that a sinusoidal current is generated and transmitted through the second and the first phase terminals 26 of the motor 24 and injected into the given energy storage 16. Both, the injected AC current and the time-varying voltage of the given energy storage 16 are monitored, and from this a frequency-dependent impedance can be determined based, at least in part, on a relation of the injected current, the monitored voltage of the given energy storage and a phase shift between them.

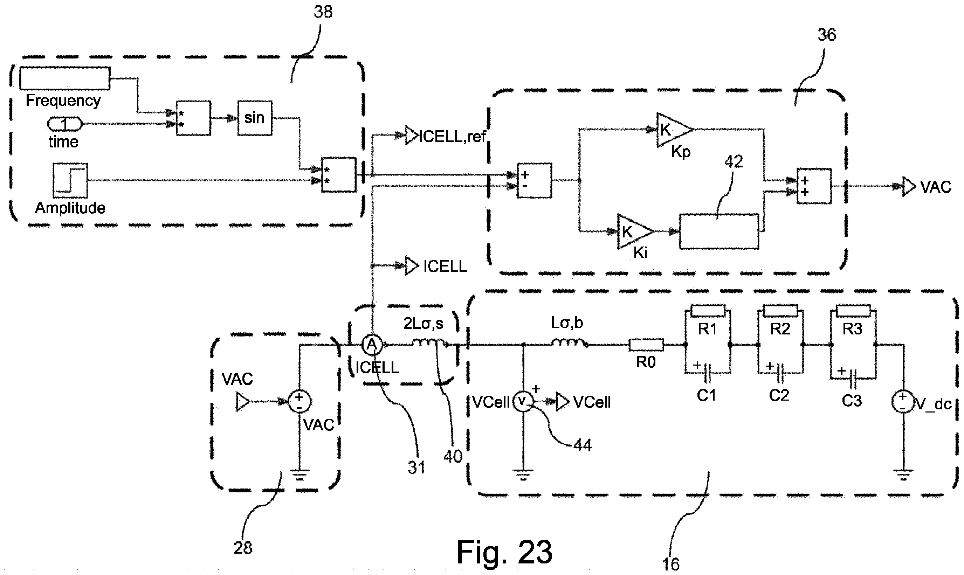

With reference to Fig. 23, for controlling the injected current generated by the second MESDCS 28, in preferred embodiments, a proportional-resonant (PR) controller 36 is used. Fig. 23 shows the schematic implementation of a proportional-resonant (PR) controller 36 to conduct an on-board impedance spectroscopy. As described in R. Teodorescu, F. Blaabjerg, M. Liserre, and P. C. Loh, "Proportional-resonant controllers and filters for grid-connected voltage-source converters," IEE Proceedings-Electric Power Applications, vol. 153, no. 5, pp. 750-762, 2006 H. Cha, T.-K. Vu, and J.-E. Kim, "Design and control of proportional- resonant controller based photovoltaic power conditioning system," in 2009 IEEE Energy Conversion Congress and Exposition. IEEE, 2009, pp. 2198-2205, a PR controller has a controller gain that can be written according to

$$F_c(s) = K_p + K_i \frac{s}{s^2 + \omega_0^2}$$

$$(17)$$

which is typically used to control sinusoidal current quantities tuned for a certain frequency. Herein, $K_p$ is a proportional term and the second term is a resonant term, wherein $\omega_o$ is the resonance frequency. With further reference to Fig. 23, a current reference module 38 is provided which generates a reference current ICELL,ref for the current that is to be injected into the battery cell 16. The PR controller 36 receives as inputs the reference current ICELL,ref, as well as the actual current ICELL, which is measured using a current meter 31 associated with the motor inductance shown at reference sign 40. Based on the values $K_p$, $K_i$ and a transfer function represented by block 42, the PR controller 36 then determines a voltage control signal VAC, which is used for controlling the output voltage of the MESDCS 28 that is used for generating the injection current (and that does not contain the battery cell 16 under investigation). In the diagram of Fig. 23, the battery cell 16 is represented by an equivalent circuit comprising a series connection of a stray capacitance $L_{\sigma,b}$, a model resistance $R_o$ and 3 model RC elements, wherein the i-th model RC element comprises a parallel connection of a resistance Ri and a capacitance $C_i$, with i = 1, ...,3. Using a voltage meter, the voltage VCELL of the battery cell is measured. For a given frequency $\omega_o$, the injection current ICELL and the cell voltage VCELL can hence be measured, and the frequency-dependent impedance value can be derived therefrom.

For a simulation, the battery parameters shown in the table of Fig. 24 and Fig. 19 were chosen. Next, the second MESDCS 28 was simulated as a variable AC source to control a current of 1.5C and 100 Hz through the motor inductances ($2L_{\sigma S}$), that was injected in one battery cell. Figure 22 shows the obtained battery voltage oscillation relative to the controlled current. Thus, the battery cell impedance for given battery can be calculated follows:

$$\overline{Z}_{\text{Cell}} = \frac{\hat{V}_{\text{Cell}}}{\hat{I}_{\text{Cell}}} e^{-j\lambda} = \frac{204 \ mV}{4.2 \ A} e^{-j5.4°} \tag{18}$$

$$\overline{Z}_{\text{Cell}} = 48.6 \ m\Omega \ e^{-j5.4°} \tag{19}$$

$$\overline{Z}_{\text{Cell}} = 48.6 \ m\Omega[\cos(-5.4°) + j\sin(-5.4°)] \tag{20}$$

and finally

$$\overline{Z}_{\text{Cell}} = 48.38 \ m\Omega - j \ 4.57 \ m\Omega \tag{21}$$

Comparing the obtained result in (21) with Fig. 19, it can be seen that a correct impedance value is obtained. Sweeping the frequency of the injected current, such as shown in Fig. 19, and using least-square fit, the impedance can be determined for a broad frequency range. This impedance itself may serve as a status indicator for the energy storage 16, or may be used to derive suitable status indicators therefrom.

However, once it has been demonstrated that relevant status information is encoded in the injected current and the monitored voltage, there are different ways to make it accessible, other than explicitly determining impedance values and fitting them to a battery model.

Again, similar to what was explained with reference to the first aspect, it would be possible to input the current and voltage information into a suitably trained machine learning algorithm, such as a convolutional neural network, that rapidly determines status parameters of interest therefrom. Since the input to such an algorithm is still frequency-dependent current and voltage information, and this information does "reflect" the impedance of the energy storage, this approach would still be considered as "electrochemical impedance spectroscopy" in the terminology used in this disclosure, even if no impedance values are explicitly established.

Importantly, the EIS spectroscopy can be carried out without need for any additional hardware, relying fully on the switching capability of the RBS or MESDCS and the voltage sensors provided therein. At most, a current meter has to be provided for measuring the injection current. However, with specific reference to the electric motor 24 as the consumer, such current meters are typically associated with the motor inductances anyhow, such that this important diagnostic capability can be established without additional hardware expense. Accordingly, it can be particularly easily implemented in any type of MESDCS or RBS used for vehicle traction or variable speed drive applications.

While the present invention has been described in terms of specific embodiments, it is understood that variations and modifications will occur to those in the art, all of which are intended as aspects of the present invention. Accordingly, only such limitations as appear in the claims should be placed on the invention.

## Claims

1. An energy storage system (20) comprising
   a branch comprising a plurality of cascaded energy storages (16), at least some of said energy storages (16) being formed by a battery cell or a battery pack comprising a plurality of battery cells,
a voltage sensor associated with at least some of said energy storages (16) for determining its voltage,
a switching arrangement comprising a plurality of switches (18),
a control system, and
at least one current meter (31),
wherein said plurality of switches (18) of said switching arrangement are operable, under control of the control system, such as to establish a selectable connection state for each of said energy storages (16), said connection states being selectable from a series connection with an adjacent energy storage,
a parallel connection with an adjacent energy storage, and
a bypass state,
wherein said control system is configured to select and establish said connection states based on at least one of a total voltage to be generated across the branch, the current voltage and/or state of charge of an individual energy storage (16) and a status parameter of said individual energy storage (16), in particular a power capability, a temperature and/or a state of health,
wherein said control system is further configured to operate said switching arrangement to carry out an estimation of a status parameter of a given energy storage (16) by connecting said given energy storage (16) and a further energy storage (16) in parallel, to thereby cause a current flow into or out of said given energy storage (16), measuring said current flow and the voltage of said given energy storage (16) using said at least one current meter (31) and the voltage sensor associated with said given energy storage (16), and determining said status parameter based on a time-dependent voltage-current-characteristic.

2. The system (20) of claim 1, wherein said branch comprises a plurality of sequentially interconnected modules (10), wherein each module (10) comprises at least two first terminals (12) and at least two second terminals (14), a corresponding one of said energy storages (16), and a plurality of module switches (18), wherein said module switches (18) of said plurality of modules (10) form said switching arrangement, wherein in each two adjacent modules (10), each of the at least two first terminals (12) of one module (10) is connected either directly or via an intermediate component to a corresponding one of said at least two second terminals (14) of the other module (10).

3. The system (20) of claim 1 or 2, said system (20) comprising one or more modular energy storage direct converter systems (MESDCS) (28), wherein each MESDCS (28) comprises a converter arm having a first end (30) and a second end (32) and comprising a branch of sequentially interconnected modules (10), wherein said control system is configured for controlling the switches (18) of the sequentially interconnected modules (10) such as to establish, for each of said modules (10), connection states selected from

    - said series connection with an adjacent energy storage (16),
    - said parallel connection with an adjacent energy storage (16) and
    - said bypass state,
    such as to provide a desired AC voltage between the first and second ends (30, 32) of said converter arm, or wherein said system (20) is a reconfigurable battery system, in which the control system is configured to dynamically select and establish, for each of said energy storages (16), connection states selected from
    - said series connection with an adjacent energy storage (16),
    - said parallel connection with an adjacent energy storage (16), and
    - said bypass state,
    wherein said control system is configured to make said selection based on one or both of the current voltage and a status parameter of individual ones of said energy storages (16), in particular based on a power capability and/or a state of health of individual ones of said energy storages (16).

4. The system (20) of one of claims 2 or 3, wherein each of said modules (10) has at most four module switches (18), and preferably three module switches (18),
    wherein preferably each module (10) has two first terminals (12) and two second terminals (14),
    wherein each energy storage (16) has a first pole (16a) connected or connectable with one of the first terminals (12) and a second pole (16b) connected or connectable with the other one of the first terminals (12),
    and wherein said plurality of module switches comprise

    - a first switch (18.1) having a first switch terminal (18a) connected with one of the second terminals (14) of the module (10) and a second switch terminal (18b) connected or connectable with the first pole of said energy storage (16),
    - a second switch (18.2) having a first switch terminal (18a) connected with the other one of the second terminals

(14) of the module (10) and a second switch terminal (18b) connected or connectable with the second pole (16b) of said energy storage (16), and
- a third switch (18.3) provided in a connection line connecting the first switch terminal (18a) of the first switch (18.1) and the second switch terminal (18b) of the second switch (18.2),
said module (10) allowing for connecting its energy storage (16) in series with the energy storage (16) of an adjacent module (10) connected to its second terminals (14) by opening the first and second switches (18.1, 18.2) and closing the third switch (18.3), and for connecting its energy storage (16) in parallel with the energy storage (16) of an adjacent module (10) connected to its second terminals (14) by closing the first and second switches (18.1, 18.2) and opening the third switch (18.3),
wherein preferably each module (10) further comprises a fourth switch (18.4) connected
either between the first pole (16a) of said energy storage (16) and the second switch terminal (18b) of the first switch (18.1), or
between the second pole (16b) of said energy storage (16) and the second switch terminal (18b) of the second switch (18.2),
said fourth switch (18.4) allowing for bypassing the energy storage (16) of a given module (10) in a parallel connection of energy storages (16) of adjacent modules (10) connected to the first terminals (12) and second terminals (14) of said given module (10), respectively, or
wherein said plurality of module switches (18) allow for connecting energy storages (16) of adjacent modules (10) in anti-series, wherein the anti-series connection of an energy storage (16) corresponds to a series connection with reversed polarity, and/or wherein said plurality of modules (10) further allow for bypassing the energy storage (16) of a given module (10) in a parallel connection of energy storages (16) of adjacent modules (10) connected to the first terminals (12) and second terminals (14) of said given module (10), respectively.

5. The system (20) of one of the preceding claims, wherein the number of current meters (31) provided in said branch is less than half the number of modules (10) in said branch, and wherein the control system is configured to select said further energy storage (16) that is to be connected in parallel with said given energy storage (16) such that a current meter (31) its arranged in a current path between poles of same polarity, and to switch each of the energy storages (16) between said given energy storage (16) and said further energy storage (16) in said bypass state, wherein only a subset of said energy storages (16) is provided with a current meter (31), wherein said switching arrangement allows for selectively connecting one pole of one of said energy storages (16) provided with a current meter (31) with the pole of same polarity of a selected one of its two neighboring energy storages (16) within said branch, wherein preferably, every second energy storage (16) belongs to said subset of energy storages (16) provided with a current meter (31).

6. The system (20) of one of the preceding claims, wherein said control system is configured for determining said status parameter based on an equivalent circuit model of the energy storage (16), said equivalent circuit model representing the impedance of said energy storage and comprising at least one model resistance and at least one model capacitance, wherein said control system is configured for determining said model resistance(s) and capacitance(s) to match said time-dependent voltage-current characteristic and wherein said model resistance(s) and capacitance(s) represent said status parameter or can be used for deriving the status parameter therefrom,
wherein said equivalent circuit model preferably comprises a series connection of a model resistance $R_o$ and a number of N model RC elements, wherein the i-th model RC element comprises a parallel connection of a resistance $R_i$ and a capacitance $C_i$, with i = 1, ...,N, wherein preferably, N=3, or N=2, or N= 1, wherein preferably, said series connection further comprises a model inductance, and/or
wherein said control system uses the status parameter of a given energy storage when selecting the connection states for this given energy storage (16) in the operation of the energy storage system (20).

7. An arrangement comprising an energy storage system (20) and an electrical consumer (24), in particular an electric motor, wherein said electrical (24) consumer has a number of M phase terminals (26) for receiving a corresponding AC phase voltage, wherein said energy storage system (26) comprises a control system and M branches, wherein the i-th branch is associated with a corresponding i-th phase terminal (26) of said electrical consumer (24), with i = 1,..., M,
wherein each branch comprises a plurality of cascaded energy storages (16), at least some of said energy storages (16) being formed by a battery cell or a battery pack comprising a plurality of battery cells,
a voltage sensor associated with at least some of said energy storages (16) for determining its voltage, and
a switching arrangement comprising a plurality of switches (18),
wherein said plurality of switches (18) of said switching arrangement are operable, under control of the control system, such as to establish a selectable connection state for each of said energy storages (16), said connection states being selectable from a series connection with an adjacent energy storage (16), and a bypass state, wherein said control system is configured to select and establish said connection states based on at least one of a total voltage to be generated across the branch, the current voltage and/or state of charge of an individual energy storage (16) and a status parameter of said individual energy storage (16), in particular a power capability, a temperature and/or a state of health,

wherein said control system is further configured to operate said switching arrangement to carry out an estimation of a status parameter of a given energy storage (16) located in the i-th branch using electrochemical impedance spectroscopy (EIS), by injecting AC current into said given energy storage (16) while monitoring a time-varying voltage of said energy storage (16), and deriving said status parameter from the injected current and the monitored voltage,

wherein said injected current is generated using energy storages of a j-th branch and transmitted through said j-th and said i-th phase terminal of said consumer, wherein i, j = 1,... ,M and i≠ j.

8. The system (20) of claim 7, wherein said control system is configured to control, during said status parameter estimation, the switching arrangement such that each of the energy storages (16) arranged between said given energy storage and said i-th phase terminal acquire said bypass state, and preferably such that all energy storages (16) in said i-th branch except for said given energy storage (16) acquire said bypass state, and/or

wherein each of said branches comprises a plurality of sequentially interconnected modules (10), wherein each module comprises at least one first terminal (12) and at least one second terminal (14), a corresponding one of said energy storages (16), and a plurality of module switches (18), wherein said module switches (18) of said plurality of modules (10) form said switching arrangement, wherein in each two adjacent modules (10), said at least one first terminal (12) of one module (10) is connected either directly or via an intermediate component to said at least one second terminal (14) of the other module (16).

9. The system of one of claims 7 or 8, wherein said energy storage system comprises M modular energy storage direct converter systems (MESDCS) (28), wherein each MESDCS (28) comprises a converter arm having a first end (30) and a second end (32), wherein said second end (32) is connected with a corresponding phase terminal (26) of the electrical consumer (24), and wherein each MESDCS (28) comprises a branch of sequentially interconnected modules (10), wherein said control system is configured for controlling the switches (18) of the sequentially interconnected modules (10) such as to establish, for each of said modules (10), connection states selected from

- said series connection with an adjacent energy storage (16), and
- said bypass state,

such as to provide said phase voltage to said phase terminal (26) of said electrical consumer (24),

wherein preferably said second ends (32) of said converter arms are connected with each other, or wherein the second end (32) of each converter arm is connected to a first end (30) of another converter arm, such that the converter arms form a ring topology, wherein preferably, the number M of phase terminals is 3, and/or

wherein said control system is configured for controlling the switches (18) of the sequentially interconnected modules (10) such as to additionally selectively establish, for each of said modules (10), a parallel connection state, in which said energy storage (16) is connected in parallel with the energy storage (16) of an adjacent module (10), or

wherein each of said branches comprises a reconfigurable battery system and an inverter,

wherein said control system is configured for controlling said inverter such as to apply said phase voltage to the corresponding phase terminal (26) of said electrical consumer (24), and

in which the control system is configured to dynamically select and establish, for each of said energy storages (16), connection states selected from

- said series connection with an adjacent energy storage (16),
- a parallel connection with an adjacent energy storage (16), and
- said bypass state,

wherein said control system is configured to make said selection based on at least one of the current voltage and/or state of charge and a status parameter of individual ones of said energy storages (16), in particular based on a power capability, a temperature and/or a state of health of individual ones of said energy storages (16).

10. The system (20) of one of claims 7 to 9, wherein each of said modules (10) has at most four module switches (18), and preferably three module switches (18),

wherein preferably each module (10) has two first terminals (12) and two second terminals (14),

wherein each energy storage (16) has a first pole (16a) connected or connectable with one of the first terminals (12) and a second pole (16b) connected or connectable with the other one of the first terminals (12),

and wherein said plurality of module switches (18) comprise

- a first switch (18.1) having a first switch terminal (18a) connected with one of the second terminals (14) of the module (10) and a second switch terminal (18b) connected or connectable with the first pole (16a) of said energy storage (16),
- a second switch (18.2) having a first switch terminal (18a) connected with the other one of the second terminals (14) of the module (10) and a second switch terminal (18b) connected or connectable with the second pole (16b) of said energy storage (16), and
- a third switch (18.3) provided in a connection line connecting the first switch terminal (18a) of the first switch (18.1) and the second switch terminal (18b) of the second switch (18.2),

said module (10) allowing for connecting its energy storage (16) in series with the energy storage (16) of an adjacent module (10) connected to its second terminals (14) by opening the first and second switches (18.1, 18.2) and closing the third switch (18.3), and for connecting its energy storage (16) in parallel with the energy storage (16) of an adjacent module (10) connected to its second terminals (14) by closing the first and second switches (18.1, 18.2) and opening the third switch (18.3),

wherein preferably each module (10) further comprises a fourth switch (18.4) connected

either between the first pole (16a) of said energy storage (16) and the second switch terminal (18b) of the first switch (18.1), or

between the second pole (16b) of said energy storage (16) and the second switch terminal (18b) of the second switch (18.2),

said fourth switch (18.4) allowing for bypassing the energy storage (16) of a given module (10) in a parallel connection of energy storages (16) of adjacent modules (10) connected to the first terminals (12) and second terminals (14) of said given module (10), respectively, or

wherein said plurality of module switches (18) allow for connecting energy storages (16) of adjacent modules (10) in anti-series, wherein the anti-series connection of an energy storage (16) corresponds to a series connection with reversed polarity, and/or wherein said plurality of modules (10) further allow for bypassing the energy storage (16) of a given module (10) in a series or parallel connection of energy storages of adjacent modules (10) connected to the first terminals (12) and second terminals (14) of said given module (14), respectively.

11. The system (20) of one of claims 7 to 10, wherein said estimation of said status parameter of a given energy storage (16) using electrochemical impedance spectroscopy (EIS) comprises injecting oscillating, in particular sinusoidal currents of various frequencies to said given energy storage (16), wherein preferably, the control system comprises a PR controller for controlling the generation of the oscillating current, wherein said estimation preferably further comprises determining a frequency-dependent impedance based, at least in part, on a relation of the injected current, the monitored voltage of said given energy storage (16) and a phase shift between said injected current and said monitored voltage for each of said various frequencies, and/or

wherein said control system is configured for determining said status parameter based on an equivalent circuit model of the energy storage (16), said equivalent circuit model representing the impedance of said energy storage and comprising at least one model resistance and at least one model capacitance, wherein said control system is configured for determining said model resistance(s) and capacitance(s) to match a measured frequency dependent current-voltage relationship, and wherein said model resistance(s) and capacitance(s) represent said status parameter or can be used for deriving the status parameter therefrom,

wherein said equivalent circuit model preferably comprises a series connection of a model resistance $R_o$ and a number of N model RC elements, wherein the i-th model RC element comprises a parallel connection of a resistance $R_i$ and a capacitance $C_i$, with $i = 1, ...,N$, wherein preferably, $N= 2$, or $N= 3$, or $N= 4$, wherein preferably, said series connection further comprises a model inductance, and/or

wherein said control system uses the status parameter of a given energy storage (16) when selecting the connection states for this given energy storage (16) in the operation of the energy storage system (20), and/or

wherein a current meter (31) is associated with each phase terminal (26) of said electrical consumer (24).

12. A method of estimating a status parameter of a given energy storage (16) in an energy storage system (20), wherein said energy storage system (20) comprises a branch comprising a plurality of cascaded energy storages (16), at least some of said energy storages (16) being formed by a battery cell or a battery pack comprising a plurality of battery cells and a switching arrangement comprising a plurality of switches (18), wherein said plurality of switches (18) of said switching arrangement are operable such as to establish a selectable connection state for each of said energy storages (16), said connection states being selectable from

- a series connection with an adjacent energy storage (16),
- a parallel connection with an adjacent energy storage (16), and
- a bypass state,

wherein said method comprises a step of carrying out an estimation of a status parameter of a given energy storage (16) by operating said switching arrangement such as to connect said given energy storage (16) and a further energy storage (16) in parallel, to thereby cause a current flow into or out of said given energy storage (16), measuring said current flow and a voltage of said given energy storage, and determining said status parameter based on a time-dependent voltage-current-characteristic.

13. The method of claim 12, wherein said status parameter is one of a power capability, a temperature and/or a state of health of said individual energy storage (16),

wherein said method preferably further comprises selecting and establishing connection states in operation of said energy storage system (20) such as to generate a predetermined voltage across the branch, wherein said selecting of connection states is based, at least in part, on the status parameter of said energy storages (16), and/or

wherein said energy storage system (20) is an energy storage system (20) according to one of claims 1 to 6, and wherein said method is carried out under control of the control system thereof, and/or

wherein in said step of connecting said given energy storage (16) and a further energy storage (16) in parallel, at least one intermediate energy storage (16) is arranged between said given energy storage (16) and said further energy storage (16), and wherein the method further comprises a step of operating said switching arrangement such as to establish said bypass state for said at least one intermediate energy storage (16), and/or

wherein said status parameter is determined based on an equivalent circuit model of the energy storage (16), said equivalent circuit model representing the impedance of said energy storage (16) and comprising at least one model resistance and at least one model capacitance, wherein said method comprises determining said model resistance(s) and capacitance(s) to match said time-dependent voltage-current characteristic, and wherein said model resistance(s) and capacitance(s) represent said status parameter or are used for deriving the status parameter therefrom, wherein preferably said equivalent circuit model comprises a series connection of a model resistance $R_o$ and a number of N model RC elements, wherein the i-th model RC element comprises a parallel connection of a resistance Ri and a capacitance $C_i$, with i = 1, ...,N, wherein preferably, N=3, or N=2, or N= 1, wherein preferably, said series connection further comprises a model inductance.

14. A method of estimating a status parameter of a given energy storage (16) in an arrangement comprising an energy storage system (20) and an electrical consumer (24), in particular electric motor, wherein said electrical consumer (24) has a number of M phase terminals (26) for receiving a corresponding AC phase voltage,

wherein said energy storage system (20) comprises M branches, wherein the i-th branch is associated with a corresponding i-th phase terminal (26) of said electrical consumer (24), with i = 1,..., M,

wherein each branch comprises a plurality of cascaded energy storages (16), at least some of said energy storages (16) being formed by a battery cell or a battery pack comprising a plurality of battery cells, and a switching arrangement comprising a plurality of switches (18),

wherein said plurality of switches (18) of said switching arrangement are operable such as to establish a selectable connection state for each of said energy storages (16), said connection states being selectable from

a series connection with an adjacent energy storage (16), and
a bypass state,

wherein said method further comprises a step of carrying out an estimation of a status parameter of a given energy storage (16) located in the i-th branch using electrochemical impedance spectroscopy (EIS), by operating said switching arrangement such as to inject AC current into said given energy storage (16) while monitoring a time-varying voltage of said energy storage, and deriving said status parameter from the injected current and the monitored voltage,

wherein said injected current is generated using energy storages of a j-th branch and transmitted through said j-th and said i-th phase terminal of said consumer (24), wherein i, j = 1,... ,M and i≠j.

15. The method of claim 14, wherein said status parameter is one of a power capability, a temperature and/or a state of health of said individual energy storage (16),

wherein said method preferably further comprises selecting and establishing connection states in operation of said energy storage system (20) such as to generate a predetermined voltage across each branch, wherein said selecting of connection states is based, at least in part, on the status parameter of said energy storages (16), and/or

wherein said energy storage system (20) is an energy storage system (20) according to one of claims 7 to 11, and wherein said method is carried out under control of the control system thereof, and/or

wherein said step of estimating said status parameter of a given energy storage (16) using electrochemical impedance spectroscopy comprises injecting oscillating, in particular sinusoidal currents of various frequencies to said given energy storage (16), wherein preferably a PR controller is used for generating said oscillating currents, and wherein said method preferably further comprises determining a frequency-dependent impedance based, at least in part, on a relation of the injected current, the monitored voltage of said given energy storage (16) and a phase shift between said injected current and said monitored voltage for each of said various frequencies, and/or

wherein said status parameter is determined based on an equivalent circuit model of the energy storage (16), said equivalent circuit model representing the impedance of said energy storage (16) and comprising at least one model resistance and at least one model capacitance, wherein said control system is configured for determining said model resistance(s) and capacitance(s) to match a measured frequency dependent current-voltage relationship, and wherein said model resistance(s) and capacitance(s) represent said status parameter or can be used for deriving the status parameter therefrom,

wherein said equivalent circuit model preferably comprises a series connection of a model resistance $R_o$ and a number of N model RC elements, wherein the i-th model RC element comprises a parallel connection of a resistance Ri and a capacitance $C_i$, with i = 1, ...,N, wherein preferably, N= 2, or N= 3, or N= 4, wherein preferably, said series connection further comprises a model inductance.

$$m_{parallel} \times I_{cell, rat} = I_{bat, rat}$$

$$P_{bat, max} = I_{bat, rat} \times V_{bat, rat}$$
$$k_{cells} = n_{series} \times m_{parallel}$$
$$E_{bat} = E_{cell} \times k_{cells}$$

$$n_{series} \times V_{cell, rat} = V_{bat, rat}$$

## Fig. 1

## Fig. 2

## Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

| R0 [mΩ] | R1 [mΩ] | R2 [mΩ] | R3 [mΩ] | C1 [mF] | C2 [mF] | C3 [F] | $L_{\sigma,b}$ [nH] |
|---------|---------|---------|---------|---------|---------|--------|---------------------|
| 41.53 | 5.02 | 7.32 | 3.23 | 75.44 | 339.5 | 3.625 | 590.8 |

Fig. 24

Fig. 23

## EP 3 975 374 A1

Europäisches
Patentamt

European
Patent Office

Office européen
des brevets

# EUROPEAN SEARCH REPORT

**Application Number**

EP 20 20 1302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/288520 A1 (ABDEL-MONEM MOHAMED [BE] ET AL) 19 September 2019 (2019-09-19) | 1,2,4, 12,13 | INV. H02J7/00 |
| Y | * paragraph [0022] - paragraph [0172]; figures 1-23 * | 3,6-11, 14,15 | |
| X | US 2016/043579 A1 (FINBERG STEVE [US] ET AL) 11 February 2016 (2016-02-11) * paragraph [0007] - paragraph [0040] * | 1,12 | |
| Y | HELLING FLORIAN ET AL: "A battery modular multilevel management system (BM3) for electric vehicles and stationary energy storage systems", 2014 16TH EUROPEAN CONFERENCE ON POWER ELECTRONICS AND APPLICATIONS, IEEE, 26 August 2014 (2014-08-26), pages 1-10, XP032651159, DOI: 10.1109/EPE.2014.6910821 [retrieved on 2014-09-25] * page 1 - page 5 * | 3,7-10, 14 | |
| Y | YI-HSIEN CHIANG ET AL: "Online estimation of internal resistance and open-circuit voltage of lithium-ion batteries in electric vehicles", JOURNAL OF POWER SOURCES, ELSEVIER SA, CH, vol. 196, no. 8, 5 January 2011 (2011-01-05), pages 3921-3932, XP028359595, ISSN: 0378-7753, DOI: 10.1016/J.JPOWSOUR.2011.01.005 [retrieved on 2011-01-14] * page 1921 - page 1923 * | 6,11,14, 15 | TECHNICAL FIELDS SEARCHED (IPC) H02J |
| Y | DE 10 2014 110410 A1 (UNIVERSITÄT DER BUNDESWEHR MÜNCHEN [DE]) 28 January 2016 (2016-01-28) * the whole document * | 3,7-10, 14 | |

-/--

The present search report has been drawn up for all claims

| Place of search | Date of completion of the search | Examiner |
|---|---|---|
| Munich | 9 March 2021 | Jonda, Sven |

EPO FORM 1503 03.82 (P04C01)

page 1 of 2

Europäisches
Patentamt

European
Patent Office

Office européen
des brevets

# EUROPEAN SEARCH REPORT

Application Number

EP 20 20 1302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABEDI VARNOSFADERANI MINA ET AL: "A Comparison of Online Electrochemical Spectroscopy Impedance Estimation of Batteries", IEEE ACCESS, vol. 6, 14 May 2018 (2018-05-14), pages 23668-23677, XP011683703, DOI: 10.1109/ACCESS.2018.2808412 [retrieved on 2018-05-14] * the whole document * | 1-15 | |

-----

TECHNICAL FIELDS
SEARCHED      (IPC)

The present search report has been drawn up for all claims

| Place of search | Date of completion of the search | Examiner |
|---|---|---|
| Munich | 9 March 2021 | Jonda, Sven |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

page 2 of 2

## ANNEX TO THE EUROPEAN SEARCH REPORT
## ON EUROPEAN PATENT APPLICATION NO.

EP 20 20 1302

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2021

| Patent document cited in search report | Publication date | Patent family member(s) | | Publication date |
|---|---|---|---|---|
| US 2019288520 A1 | 19-09-2019 | EP | 3455917 A1 | 20-03-2019 |
| | | US | 2019288520 A1 | 19-09-2019 |
| | | WO | 2017194790 A1 | 16-11-2017 |
| US 2016043579 A1 | 11-02-2016 | US | 2011057617 A1 | 10-03-2011 |
| | | US | 2016043579 A1 | 11-02-2016 |
| | | WO | 2011025937 A2 | 03-03-2011 |
| DE 102014110410 A1 | 28-01-2016 | CN | 106575928 A | 19-04-2017 |
| | | DE | 102014110410 A1 | 28-01-2016 |
| | | EP | 3172824 A1 | 31-05-2017 |
| | | US | 2017207631 A1 | 20-07-2017 |
| | | US | 2020235582 A1 | 23-07-2020 |
| | | WO | 2016012247 A1 | 28-01-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102014110410 A1

**Non-patent literature cited in the description**

- **S. CI ; N. LIN ; D. WU.** Reconfigurable battery techniques and systems: A survey. *IEEE Access,* 2016, vol. 4, 1175-1189
- **F. CHEN ; W. QIAO ; L. QU.** A modular and reconfigurable battery system. *2017IEEE Applied Power Electronics Conference and Exposition (APEC),* March 2017, 2131-2135
- **W. HAN ; T. WIK ; A. KERSTEN ; G. DONG ; C. ZOU.** Next-Generation Battery Management Systems: Dynamic Reconfiguration. *IEEE Ind. Electron. Mag.,* 2020
- **A. KERSTEN ; M. KUDER ; E. GRUNDITZ ; Z. GENG ; E. WIKNER ; T. THIRINGER ; T. WEYH ; R. ECKERLE.** Inverter and battery drive cycle efficiency comparisons of chb and mmsp traction inverters for electric vehicles. *2019 21st European Conference on Power Electronics and Applications (EPE '19 ECCE Europe),* September 2019, 1-2
- **O. THELIANDER ; A. KERSTEN ; M. KUDER ; E. GRUNDITZ ; T. THIRINGER.** Lifep04battery modeling and drive cycle loss evaluation in cascaded h-bridge inverters for vehicles. *2019 IEEE Transportation Electrification Conference and Expo (ITEC),* June 2019, 1-7
- **A. KERSTEN ; O. THELIANDER ; E. A. GRUNDITZ ; T. THIRINGER ; M. BONGIORNO.** Battery loss and stress mitigation in a cascaded h-bridge multilevel inverter for vehicle traction applications by filter capacitors. *IEEE Transactions on Transportation Electrification,* September 2019, vol. 5 (3), 659-671
- **A. BESSMAN ; R. SOARES ; O. WALLMARK ; P. SVENS ; G. LINDBERGH.** Aging effects of ac harmonics on lithium-ion cells. *Journal of Energy Storage,* 2019, vol. 21, 741-749
- **F. HELLING ; S. GÖTZ ; T. WEYH.** A battery modular multilevel management system (bm3) for electric vehicles and stationary energy storage systems. *2014 16th European Conference on Power Electronics and Applications,* August 2014, 1-10
- **X. LI ; Z. WANG.** A novel fault diagnosis method for lithium-ion battery packs of electric vehicles. *Measurement,* 2018, vol. 116, 402-411

- **D. ANDRE ; C. APPEL ; T. SOCZKA-GUTH ; D. U. SAUER.** Advanced mathematical methods of SOC and SOC estimation for lithium-ion batteries. *Journal of power sources,* 2013, vol. 224, 20-27
- **X. HU ; D. CAO ; B. EGARDT.** Condition monitoring in advanced battery management systems: Moving horizon estimation using a reduced electrochemical model. *IEEE/ASME Transactions on Mechatronics,* February 2018, vol. 23 (1), 167-178
- **S. SKOOG ; S. DAVID.** Parameterization of linear equivalent circuit models over wide temperature and soc spans for automotive lithium-ion cells using electrochemical impedance spectroscopy. *Journal of Energy Storage,* 2017, vol. 14, 39-48
- **A. HENTUNEN ; T. LEHMUSPELTO ; J. SUOMELA.** Time-domain parameter extraction method for thevenin-equivalent circuit battery models. *ieee transactions on energy conversion,* 2014, vol. 29 (3), 558-566
- **S. SKOOG.** Parameterization of equivalent circuit models for high power lithium-ion batteries in hev applications. *2016 18th European Conference on Power Electronics and Applications (EPE'16 ECCE Europe),* September 2016, 1-10
- **Y.-H. CHIANG ; W.-Y. SEAN ; J.-C. KE.** Online estimation of internal resistance and open-circuit voltage of lithium-ion batteries in electric vehicles. *Journal of Power Sources,* 2011, vol. 196 (8), 3921-3932
- **B. FRIDHOLM ; T. WIK ; M. NILSSON.** Robust recursive impedance esti- mation for automotive lithium-ion batteries. *Journal of Power Sources,* 2016, vol. 304, 33-41
- **H. BLANKE ; O. BOHLEN ; S. BULLER ; R. W. DE DONCKER ; B. FRICKE ; A. HAMMOUCHE ; D. LINZEN ; M. THELE ; D. U. SAUER.** Impedance measurements on lead-acid batteries for state-of-charge, state-of-health and cranking capability prognosis in electric and hybrid electric vehicles. *Journal of power Sources,* 2005, vol. 144 (2), 418-425

- **P. MAURACHER ; E. KARDEN.** Dynamic modelling of lead/acid batteries using impedance spectroscopy for parameter identification. *Journal of power sources,* 1997, vol. 67 (1-2), 69-84
- **F. HELLING ; S. GÖTZ ; T. WEYH.** A battery modular multilevel manage- ment system (BM3) for electric vehicles and stationary energy storage systems. *2014 16th European Conference on Power Electronics and Applications,* August 2014, 1-10
- **M. KUDER ; J. SCHNEIDER ; A. KERSTEN ; T. THIRINGER ; R. ECKERLE ; T. WEYH.** Battery modular multilevel management (BM3) converter applied at battery cell level for electric vehicles and energy storages. *PCIM Europe 2020; International Exhibition and Conference for Power Electronics, Intelligent Motion, Renewable Energy and Energy Management,* 2020, 1726-1733
- **A. KERSTEN ; M. KUDER ; E. GRUNDITZ ; Z. GENG ; E. WIKNER ; T. THIRINGER ; T. WEYH ; R. ECKERLE.** Inverter and battery drive cycle efficiency comparisons of CHB and MMSP traction inverters for electric vehicles. *2019 21st European Conference on Power Electronics and Applications (EPE '19 ECCE Europe),* September 2019, 1-2
- **A. SINGER ; F. HELLING ; T. WEYH ; J. JUNGBAUER ; H. PFISTERER.** Modular multilevel parallel converter based split battery system (m2b) for stationary storage applications. *2017 19th European Conference on Power Electronics and Applications (EPE'17 ECCE Europe),* September 2017, 1-10
- *Lifep04battery modeling and drive cycle loss evaluation in cascaded h-bridge inverters for vehicles*
- **Y.-H. CHIANG.** *Online estimation of internal resistance and open-circuit voltage of lithium-ion batteries in electric vehicles*
- Battery Cell - Product Description: ICR18650 C2 2800mAh. *LG Chem,* 05 April 2019, https://www.batteryspace.com/prod-specs/5702 5.pdf
- Battery Cell - Product Description: ICR18650 C2 2800mAh, using the battery analyzer Gamry Reference 3000 (Gamry Instruments, "Gamry reference 3000 - electrochemical measurement device. *LG Chem,* 03 April 2020, https://www.gamry.com/potentiostats/reference-3000
- **R. TEODORESCU ; F. BLAABJERG ; M. LISERRE ; P. C. LOH.** Proportional-resonant controllers and filters for grid-connected voltage-source converters. *IEE Proceedings-Electric Power Applications,* 2006, vol. 153 (5), 750-762
- Design and control of proportional- resonant controller based photovoltaic power conditioning system. **H. CHA ; T.-K. VU ; J.-E. KIM.** 2009 IEEE Energy Conversion Congress and Exposition. IEEE, 2009, 2198-2205